Europäisches Patentamt

European Patent Office

Office européen des brevets

(11) Veröffentlichungsnummer : **0 029 222**
**B1**

# (12) EUROPÄISCHE PATENTSCHRIFT

(45) Veröffentlichungstag der Patentschrift :
30.07.86

(21) Anmeldenummer : 80107010.3

(22) Anmeldetag : 13.11.80

(51) Int. Cl.⁴ : **B 03 D 1/24, C 02 F 1/24**

(54) **Integrierte Flotations-Filtrations-Anlage und Verfahren zur integrierten Flotation und Filtration.**

(30) Priorität : 17.11.79 DE 2946520

(43) Veröffentlichungstag der Anmeldung :
27.05.81 Patentblatt 81/21

(45) Bekanntmachung des Hinweises auf die Patenterteilung : 30.07.86 Patentblatt 86/31

(84) Benannte Vertragsstaaten :
AT BE CH DE FR GB IT LI NL

(56) Entgegenhaltungen :
AU-B-    4 651
DE-A- 2 652 329
DE-C-   294 748
DE-C-   612 919
FR-A- 1 450 629
GB-A-   795 992
US-A- 4 045 243

(73) Patentinhaber : **Bedmor Beteiligungs- und Verwaltungsgesellschaft mbH
Bedmor 2
D-2980 Norden (DE)**

(72) Erfinder : **Schmidt, Friedrich-Karl
Hochstrasse 103
D-4350 Recklinghausen (DE)**

(74) Vertreter : **Wolgast, Rudolf, Dr. et al
Bökenbusch 41 Postfach 11 03 86
D-5620 Velbert 11 Langenberg (DE)**

## Beschreibung

Die Erfindung betrifft eine integrierte Flotations-Filtrations-Anlage und ein integriertes Flotations-Filtrations-Verfahren.

Bei der Flotation wird die Abtrennung von Schwebstoffen aus einer Flüssigkeit wie Wasser dadurch bewirkt, daß in der Flüssigkeit ein aufsteigender Strom fein verteilter Gasbläschen erzeugt wird, der die in der Flüssigkeit suspendierten Schwebstoffe mitnimmt und an der Oberfläche der Flüssigkeit aufschwimmen läßt. Der so an der Oberfläche der Flüssigkeit abgesetzte Flotationsschlamm kann dann durch ein Räumgerät abgezogen werden. Die Schwebstoffe können aber auch in einer vorgeschalteten Flockungsstufe durch die Zugabe von Flockungsmitteln künstlich in der Flüssigkeit erzeugt werden, auf welche Weise eine wirksamere Reinigung der Flüssigkeit von Schwebstoffen erzielt werden kann. Insgesamt hat sich dabei die sogenannte Druckentspannungsflotation als besonders vorteilhaft erwiesen, weil dadurch kleinere Bläschen in der Flüssigkeit erzeugt werden können als bei direkter Begasung durch Düsen. Bei der Druckentspannungsflotation wird eine schwebstofffreie Flüssigkeit, die teilweise auch im Kreis geführt werden kann, mit einem Gas unter einem Überdruck von ca. 3 bis 8 bar gesättigt und über ein oder mehrere Entspannungsventile der schwebstoffhaltigen Flüssigkeit im bereich des Zulaufs zugeführt.

Bei den zumeist rechteckigen Flotationsanlagen befindet sich der Zulauf in der Regel am Grunde einer Schmalseite des Flotationsbeckens und der Ablauf an der gegenüberliegenden Schmalseite des Flotationsbeckens. Vor dem Ablauf ist eine Austragsvorrichtung mit einer Räumvorrichtung angeordnet, die den Flotationsschlamm austrägt und der weiteren Verarbeitung zuführt. In vielen Fällen lassen sich in den Flotationsbecken Sedimentablagerungen nicht verhindern, so daß für diese eine zusätzliche Räumvorrichtung vorgesehen werden muß, die das am Boden des Flotationsbeckens angesammelte Sediment in eine Rinne fördert, aus der es abgezogen werden kann, ohne den Flotationsprozeß zu stören (vgl. Friedrich-Karl Schmidt, « Möglichkeiten der Flotation », abgedruckt in UMWELT Nr. 5/1975, Seiten 31 bis 36).

Die Wirksamkeit der bekannten Flotationsanlagen ist zwar recht gut, jedoch stellt die Notwendigkeit zur Verwendung von Räumgeräten nicht nur für den Flotationsschlamm, sondern auch für abgesetztes Sediment einen unerwünschten großen Aufwand dar, und außerdem wird in den bekannten Flotationsanlagen keine vollständige Abscheidung der Schwebstoffe erreicht, so daß in vielen Fällen das aus der Flotationsanlage austretende Wasser noch eine nicht vernachlässigbare Konzentration an Schwebstoffen enthält. Insbesondere bei wechselnden Belastungen der Flotationsanlage ergeben sich Probleme bei der richtigen Auslegung der Anlage, wenn Durchbrüche vermieden werden sollen. Es ist bereits versucht worden, diesem Problem durch die Nachschaltung einer Filtrationsanlage abzuhelfen, wodurch jedoch der Aufwand für die Gesamtanlage unvertretbar groß wird (Kommunale Kläranlage Lütjensee, Schleswig-Holstein).

Es ist auch eine kommunale Kläranlage (Tangstedt, Schleswig-Holstein) bekannt geworden, bei der in dem Flotationsbecken eine Filtriervorrichtung in Gestalt eines Sandfilterbettes angeordnet ist. Eine solche integrierte Anlage hat jedoch dadurch Probleme, daß das Sandfilterbett von Zeit zu Zeit durch Rückspülung gereinigt werden muß, was den erwünschten kontinuierlichen Betrieb der integrierten Anlage verhindert und eine zusätzliche Aufbereitung des Rückspülwassers erfordert.

Ein bekanntes Trommelfilter (DE-C 612 919) taucht in ein eine Trübe enthaltendes Gefäß ein und ist von einer Stirnseite her in einen Belüftungsektor, einen Saugsektor und einen Überdrucksektor unterteilt, mit denen die Kammern des Trommelfilters bei dessen Umdrehung nacheinander in Verbindung gebracht werden. Der Belüftungsektor befindet sich unterhalb des Flüssigkeitsspiegels und ist an eine Belüftungsleitung angeschlossen; die Belüftung bewirkt eine Abscheidung der Trübe an der Oberfläche der Flüssigkeit in dem Gefäß. Im Saugsektor, der sich vom Flüssigkeitsspiegel in den Raum oberhalb der Flüssigkeit erstreckt, wird der als Folge der Belüftung an der Flüssigkeitsoberfläche abgeschiedene Schaum angesaugt und filtriert. Anschließend wird im Überdrucksektor der an dem Filter haftende Schlamm durch Gebläseluft abgedrückt und mit Hilfe einer Walze und einer Schabeplatte von dem Filter abgenommen, bevor dieses wieder in die Flüssigkeit eintritt. Durch dieses Trommelfilter wird nur der aufgeschwommene Schaum aufgenommen und ausgetragen, nicht aber die Flüssigkeit filtriert. Nicht aufgeschwommene Trübeteilchen müssen der Anlage gesondert entnommen werden.

Bei einer bekannten Vorrichtung zur kontinuierlichen Abtrennung von Schwebstoffasern, insbesondere Cellulosefasern, durch Flotation wird ein Flotationsbecken in Durchströmungsrichtung in Längsrichtung in eine Mehrzahl von Kammern unterteilt, die in einem gemeinsamen, überlaufartigen Ablauf enden. In diesen Kammern stellt sich eine im wesentlichen laminare Strömung ein. Die aufschwimmenden Schwebstoffe sammeln sich an der Oberfläche der Flüssigkeit in den Kammern, deren Wände sich im Bereich des Ablaufs unter der Flüssigkeitsoberfläche befinden. Eine Austragsvorrichtung fördert die aufgeschwommenen Schwebstoffe über den Ablauf hinweg in eine besondere, vom Flotationsbecken durch eine Trennwand getrennte Kammer. Die Austragsvorrichtung ist von Schabern an einer umlaufenden Kette oder einem umlaufenden Bandfilter gebildet und erfaßt nur den Oberflächenbereich der das Flotationsbecken durchsetzenden Flüssigkeit im Bereich des Ablaufs. Es wird daher nicht die gesamte Flüssigkeit und insbesondere nicht der nicht-flotierte Schwebstoffanteil erfaßt.

Die Aufgabe der Erfindung besteht darin, eine integrierte Flotations-Filtrations-Anlage der eingangs genannten Art zu schaffen, bei der auch bei wechselnden Belastungen eine möglichst vollständige Abscheidung der Schwebstoffe in kontinuierlicher Arbeitsweise erreicht wird.

Erfindungsgemäß wird diese Aufgabe durch eine integrierte Flotations-Filtrations-Anlage gelöst, die enthält :

Ein Flotationsbecken mit einem Boden und mit einem Zulauf für schwebstoffhaltige Flüssigkeit ;

eine kombinierte Filtrier-Austragsvorrichtung bzw. Filtriervorrichtung mit einer zusammenwirkenden Austragsvorrichtung, die sich über die Breite des Flotationsbeckens und nahe von dessen Boden bis über den Flüssigkeitsspiegel hinaus erstreckt und das Flotationsbecken in Durchströmungsrichtung der Flüssigkeit in eine Flotationszone und eine im Schwebstoffgehalt verminderte Reinflüssigkeitszone unterleilt ;

eine im Bereich des Zulaufs nahe dem Boden des Flotationsbeckens und in der Durchströmungsrichtung der Flüssigkeit vor der kombinierten Filtrier-Austragsvorrichtung bzw. Filtriervorrichtung mit der zusammenwirkenden Austragsvorrichtung angeordnete Begasungseinrichtung ; und

einen Ablauf für im Schwebstoffgehalt verminderte Reinflüssigkeit in Durchströmungsrichtung hinter der Unterteilung des Flotationsbeckens durch die kombinierte Filtrier-Austragsvorrichtung bzw. Filtriervorrichtung mit der zusammenwirkenden Austragsvorrichtung.

Das erfindungsgemäße integrierte Flotations-Filtrations-Verfahren enthält die folgenden Verfahrensschritte :

Durchleiten einer schwebstoffartigen Flüssigkeit durch ein Flotationsbecken ;

Begasen der schwebstoffhaltigen Flüssigkeit beim Eintritt in das Flotationsbecken ;

Filtrieren der das Flotationsbecken durchsetzenden Flüssigkeit nach der Begasung und gleichzeitiges Austragen flotierter und filtrierter Schwebstoffanteile durch Fördern eines Filters durch die das Flotationsbecken durchsetzende Flüssigkeit unter einem Winkel zur Durchströmungsrichtung der Flüssigkeit ;

Entnehmen von im Schwebstoffgehalt verminderter Reinflüssigkeit im Anschluß an die Filtration.

Weitere Ausgestaltungen und Weiterentwicklungen der Erfindung sind in den Unteransprüchen gekennzeichnet.

Durch die das Flotationsbecken durchsetzende und teilende kombinierte Filtrier-Austragsvorrichtung bzw. Filtriervorrichtung mit zusammenwirkender Austragsvorrichtung wird zusätzlich zur Flotation eine Filtration der in das Flotationsbecken eingeführten Flüssigkeit bewirkt, so daß in dem in Durchströmungsrichtung dahinter befindlichen Ablauf kontinuierlich im Schwebstoffgehalt hinreichend verringerte Flüssigkeit anfällt. Die integrierte Anlage dieser Art erlaubt eine Entlastung der Filtriervorrichtung durch die vorgeschaltete Flotation und ist andererseits weniger kritisch hinsichtlich der Auslegung der Flotationsanlage, weil die Filtriervorrichtung Ausfälle und Störungen bei der Flotation auffangen kann, ohne daß die Anlage insgesamt ausfällt oder die Qualität der am Ablauf anfallenden Reinflüssigkeit vermindert wird. Darüber hinaus ermöglicht die kombinierte Filtrier- und Austagsvorrichtung den laufenden Austrag der flotierten Schwebstoffe unter Erfassung auch der nicht flotierbaren Schwebstoffanteile, so daß die Anlage kontinuierlich und ohne Unterbrechung durch Arbeiten an der Filtriervorrichtung betrieben werden kann. Dabei fällt der Schlamm mit höherem Trocknungsgrad an als bei der bekannten Anlage. Die integrierte Anlage dieser Art verursacht geringere Gesamtanlagekosten und hat einen geringeren Platzbedarf.

Weitere Vorteile lassen sich dadurch erzielen, daß die Filtrier- und Austragvorrichtung ein umlaufendes Filter bildet, das kontinuierlich oder diskontinuierlich angetrieben ist. Ausgehend vom Zulauf des Flotationsbeckens kann dabei das Filter oberhalb der Flüssigkeit so umgelenkt werden, daß der Schlamm jenseits einer Trennwand von dem Filter in vorgetrocknetem Zustand abfällt. Die Lösung des Schlamms von dem Filter kann dadurch weiter gefördert werden, daß oberhalb des Flüssigkeitsspiegels und unterhalb des Filters eine Unterdruckzone ausgebildet wird. Schließlich kann anschließend auch noch eine Waschung des Filters in einer Flüssigkeitswaschzone erfolgen.

Der Schlamm kann auch einer Walzenpresse zugeführt werden, wodurch er in wesentlich kleineren Volumina und mit erheblich höherem Trocknungsgrad anfällt, als dies bei den bekannten Flotationsanlagen zu erreichen ist.

Zusätzlich, aber auch ausschließlich, kann im Bereich der Flotationszone hinter dem Filter eine Einrichtung vorgesehen werden, die das Filter durchsetzende Gasbläschen erzeugt und in Verbindung mit einer Druckentspannungsflotation eine mit druckgasgesättigter Flüssigkeit versorgte Entspannungszone bildet.

Die Lösung des Schlamms von dem Filter, aber auch der Absetzvorgang in dem Flotationsbecken kann zusätzlich durch mindestens einen Vibrator gefördert werden.

Ausführungsbeispiele der Erfindung sind in den Abbildungen dargestellt und werden nachfolgend im einzelnen erläutert und beschrieben. Es zeigen

Figur 1 eine schematische Längsschnittdarstellung einer ersten Ausführungsform der erfindungsgemäßen integrierten Flotations-Filtrations-Anlage ;

Figur 2 eine schematische Längsschnittdarstellung einer modifizierten Ausführung der Anlage nach Fig. 1 ;

Figur 3 eine schematische Längsschnittdarstellung einer zweiten Ausführungsform der erfindungsgemäßen Flotations-Filtrations-Anlage ;

Figur 4 eine schematische Längsschnittdarstellung einer dritten Ausführungsform der erfindungsgemäßen integrierten Flotations-Filtrations-Anlage ;

Figur 5 eine schematische Längsschnittdarstellung einer Variante der integrierten Flotations-Filtrations-Anlage nach Figur 4 entsprechend Figur 1 ;

Figur 6 eine schematische Längsschnittdarstellung einer vierten Ausführungsform der erfindungsgemäßen integrierten Flotations-Filtrations-Anlage ;

Figur 7 eine Detailansicht der Filterführung bei den integrierten Flotations-Filtrations-Anlagen nach Figuren 1, 2, 4 und 5.

In den Abbildungen sind Druckentspannungsflotationsanlagen dargestellt ; die darin gezeigten Filtrier- und Austragvorrichtungen sind in ihrer Wirkungsweise und in ihrem Wirkungsgrad jedoch nicht an eine Druckentspannungsflotation gebunden, sondern können in gleicher Weise und mit gleichen Vorteilen in Flotationsanlagen mit anderen bekannten Begasungseinrichtungen eingesetzt werden.

In den nachfolgend beschriebenen Flotationsanlagen wird in einem Flotationsbecken durch eine Filtrier- und Austragvorrichtung eine Flotationszone und Reinflüssigkeitszone bestimmt. Im einfachsten Fall, der nicht durch eine Abbildung dargestellt ist, erstreckt sich eine Filterplatte diagonal vom Boden der Zulaufseite bis zur Ablaufseite über die gesamte Breite durch das Flotationsbecken, wobei ein Ablauf in Durchströmungsrichtung hinter der Filterplatte in der Reinflüssigkeitszone angeordnet ist. Die Filterplatte stützt sich an gegenüberliegenden Seiten des Flotationsbeckens an Schienen ab und kann gegebenenfalls leicht zu Reinigungs- und Wartungszwecken ausgebaut werden. Eine Räumvorrichtung bekannter Art (Friedrich-Karl Schmidt, l. c.) räumt den an der Flüssigkeitsoberfläche abgeschiedenen Flotationsschlamm ab, und es ist eine mit der Filterplatte zusammenwirkende Austragvorrichtung vorgesehen, die an dem Filter abgesetztes Sediment aufnimmt und der Räumvorrichtung zuführt, so daß das Sediment zusammen mit dem Flotationsschlamm abgeräumt wird.

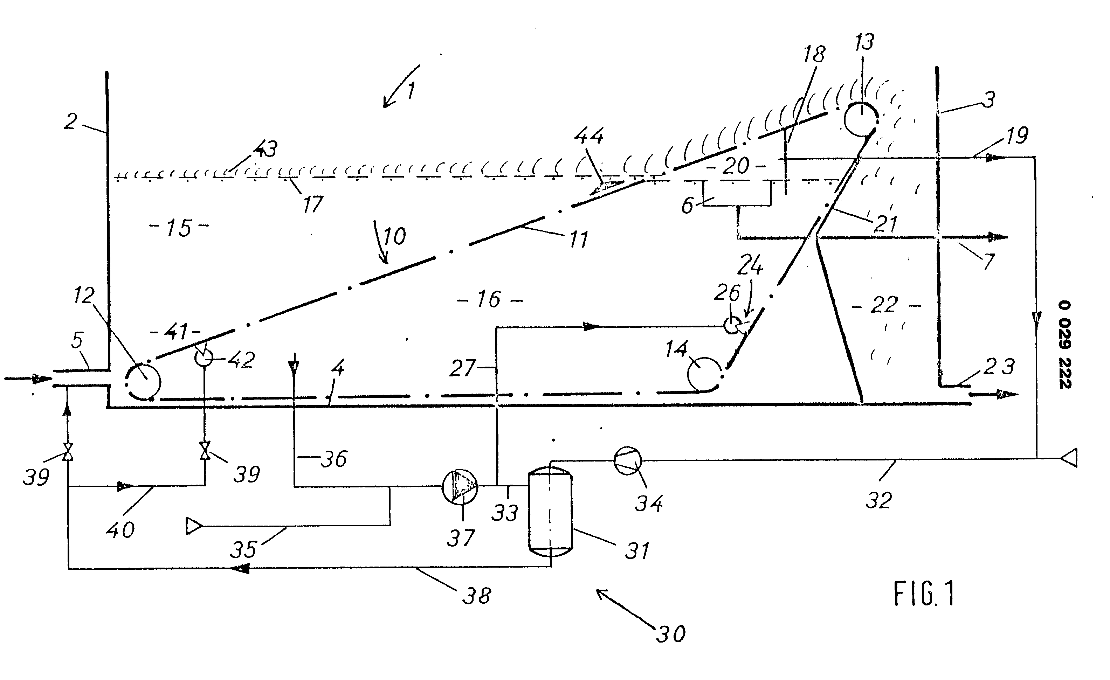

Figur 1 zeigt eine erste Ausführungsform einer integrierten Flotations-Filtrations-Anlage. Das Flotationsbecken 1 hat eine erste Schmalseite 2 und eine zweite Schmalseite 3. In geringer Höhe über dem Boden 4 des Flotationsbeckens 1 befindet sich an der Schmalseite 2 ein Zulauf 5, der sich über die gesamte Schmalseite 2 erstreckt. An der gegenüberliegenden Schmalseite 3 des Flotationsbeckens 1 befindet sich ein überlaufartig ausgebildeter Ablauf 6 mit einer Reinflüssigkeitsleitung 7. Der Ablauf 6 bildet einen einseitig offenen Kasten z. B. aus Blech, der an den Seitenwänden des Flotationsbeckens 1 befestigt ist. Der Kasten kann dabei gegebenenfalls auch höhenverstellbar angeordnet sein. Die vom Boden des Ablaufs 6 ausgehende Reinflüssigkeitsleitung ist in üblicher Weise abdichtend durch eine der Seitenwände des Flotationsbeckens 1 hindurchgeführt und ist im Fall des höhenverstellbaren Kastens flexibel. Anstelle des Ablaufs 6 kann zur Entnahme der Reinflüssigkeit auch eine an die Saugseite einer Pumpe angeschlossene Ablaufleitung vorgesehen werden, die ebenfalls in üblicher Weise abdichtend durch eine der Seitenwände des Flotationsbeckens 1 hindurchgeführt ist. Die mit der Ablaufleitung verbundene Pumpe wird dabei entsprechend dem Zufluß gesteuert.

Innerhalb des Flotationsbeckens 1 befindet sich eine kombinierte Filtrier- und Austragvorrichtung 10, die nachfolgend im einzelnen beschrieben wird. Sie enthält ein umlaufendes Bandfilter 11, das über drei Rollen geführt ist. Eine erste Umlenkrolle 12 befindet sich nahe dem Boden 4 des Flotationsbeckens 1 an der Schmalseite 2 unterhalb des Zulaufs 5. Eine Antriebsrolle 13 befindet sich nahe der rechten Schmalseite 3 des Flotationsbeckens 1 und eine zweite Umlenkrolle 14 befindet sich wieder nahe dem Boden 4 des Flotationsbeckens 1 in dessen mittlerem Bereich. Jede der Rollen 12 bis 14 besteht aus Hohlwellen, die sich über die Breite des Flotationsbeckens 1 erstrecken und die an den Enden in an den Seitenwänden des Flotationsbeckens 1 angeordneten Lagern gelagert sind. Die Hohlwellen tragen an ihren Enden Kettenräder, die über einen Kettentrieb untereinander in Antriebsverbindung stehen. Dabei dient zweckmäßigerweise die oberhalb des Flüssigkeitsspiegels befindliche Rolle 13 als Antriebsrolle, die über einen Kettentrieb mit einem Elektromotor in Antriebsverbindung steht, der am oberen Rand des Flotationsbeckens 1 gehalten ist. Die Ketten sind an Kettenführungen an den Seitenwänden des Flotationsbeckens 1 geführt. Der Antriebsmotor kann aber auch unmittelbar mit der Antriebsrolle 13 verbunden werden. Die in Figur 1 aus Gründen der Übersichtlichkeit nicht im einzelnen dargestellte Antriebsvorrichtung besteht aus handelsüblichen Bauteilen.

Das Bandfilter 11 besteht aus einem Filtergewebe, das entsprechend den von dem jeweiligen Anwendungszweck bestimmten Anforderungen ausgewählt ist. Es verläuft ausgehend von der ersten Umlenkrolle 12 diagonal durch das Flotationsbecken 1 zur Antriebsrolle 13 oberhalb des Flüssigkeitsspiegels 17 und von dort zurück über die zweite Umlenkrolle 14, die über dem Boden 4 des Flotationsbeckens 1 in dessen mittlerem Bereich angeordnet ist. Bei der dargestellten Ausführung liegt das Bandfilter 11, das schwach durchhängt, mit seinen Rändern seitlich den Ketten auf und trennt dadurch die Flotationszone 15 von der Reinflüssigkeitszone 16, in der sich der Ablauf 6 zwischen der vorlaufenden und der zurücklaufenden Bahn des Bandfilters 11 befindet.

Bei Anlagen von kleineren Dimensionen kann das Bandfilter 11 auch über feststehende Umlenkrollen oder dergl. geleitet werden ; es ist dann an den Rändern mit einer Lochung versehen, in die ein mit der Antriebsrolle verbundenes Zahnrad eingreift. Bei Anlagen von größeren Dimensionen können an den Seitenwänden des Flotationsbeckens gegebenenfalls auch besondere Führungsschienen für die Ränder des Bandfilters 11 vorgesehen werden. Es empfiehlt sich jedoch dann zur Vermeidung zu weitgehenden Durchhängens und zu hoher Beanspruchung des Bandfilters 11, unterhalb des Bandfilters 11 Lochbleche oder dergl. anzubringen, die sich über die ganze Breite des Bandfilters 11 erstrecken und an den Seitenwänden des Flotationsbeckens befestigt sind.

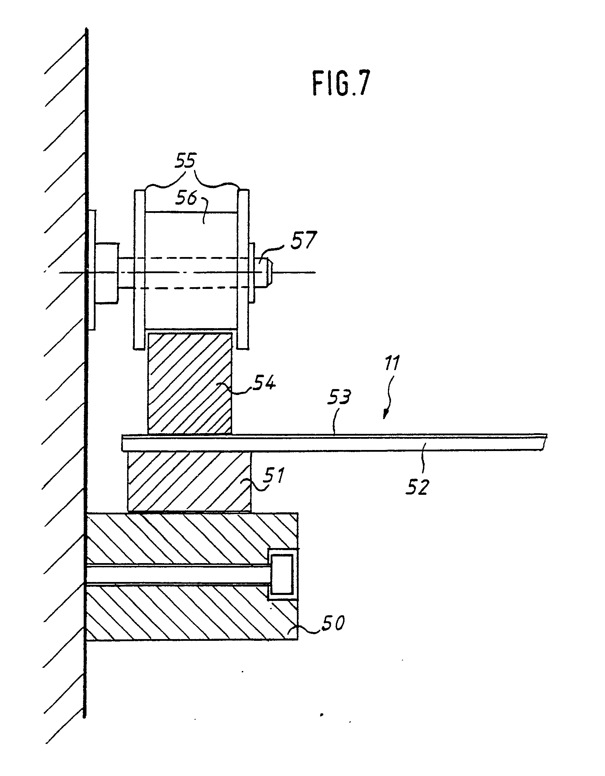

Figur 7 zeigt im Detail ein Beispiel für die Ausbildung der abdichtenden Führung des Bandfilters 11 an den Seitenwänden des Flotationsbeckens 1, wobei der Einfachheit halber nur die Führung an einer Seitenwand dargestellt ist. An der Seitenwand ist eine entsprechend der Laufrichtung des Bandfilters 11 verlaufende Schiene 50 befestigt, der das Bandfilter 11 mit einem Gleitstreifen 51 aufliegt. Der Gleitstreifen 51 ist fest mit der Unterseite des Randes einer perforierten Stützunterlage 52 verbunden, die das Filtergewebe 53 abstützt. Der Gleitstreifen 51 besteht aus einem Material, das gegenüber der Schiene gleitfähig ist. Das Filtergewebe 53 ist am Rand mit einem elastischen Band 54 versehen, das zwischen den Wangen 55 einer Andrückrolle 56 geführt ist, die auf einer Welle 57 gelagert ist. Die Welle 57 ist an der Seitenwand befestigt, an der oberhalb der Schiene 50 eine Reihe solcher Andrückrollen 56 in dieser Weise angeordnet sind.

Im Bereich zwischen der Flüssigkeitsoberfläche 17 und der oberhalb dieser angeordneten Antriebsrolle 13 erstreckt sich eine mit dem unteren Rand in die Reinflüssigkeit eintauchende und mit dem oberen Rand dem Bandfilter 11 von unten anliegende Trennwand 18, die über eine Leitung 19 an eine Unterdruckquelle (s. w. u.) angeschlossen ist. Dadurch wird in dem Bereich oberhalb der Flüssigkeitsoberfläche 17 und unterhalb des Bandfilters 11 eine Unterdruckzone 20 ausgebildet. Im Bereich der Schmalseite 3 des Flotationsbeckens 1 erstreckt sich ein Trennwand 21 quer durch das Flotationsbecken 1 als Teil der Schlammabzugsvorrichtung und bildet dadurch mit der Schmalseite 3 und den entsprechenden Teilen der Seitenwände des Flotationsbeckens 1 einen Sammelbehälter 22 mit einem Abzug 23 für den darin gesammelten Schlamm. Die Trennwand 21 kann an ihrem oberen Rand einen an der zurücklaufenden Bahn des Bandfilters 11 angreifenden Abstreifer tragen.

Im Bereich zwischen der Trennwand 21 und der zurücklaufenden Bahn des Bandfilters 11 zwischen der Antriebsrolle 13 und der zweiten Umlenkrolle 14 ist eine Flüssigkeitswaschzone 24 ausgebildet. In diesem Bereich ist an der Innenseite der zurücklaufenden Bahn des Bandfilters 11 eine Waschvorrichtung 26 in Gestalt von Fächerdüsen angeordnet, die von einer an den gegenüberliegenden Seitenwänden des Flotationsbeckens 1 gehalterten Rohrleitung ausgehen. Die Waschvorrichtung 26 ist über eine durch eine Seitenwand des Flotationsbeckens 1 in üblicher Weise abdichtend hindurchgeführte Leitung 27 an eine noch zu beschreibende Flüssigkeitszufuhrleitung 33 für eine Druckgassättigungseinrichtung 30 angeschlossen, und zwar an die Druckseite eine Pumpe 37.

Die allgemein mit 30 bezeichnete Druckgassättigungseinrichtung besteht aus einem Druckbehälter 31, dem über eine erste Zuleitung 32 Druckgas unter einem bestimmten Druck in der Größenordnung von 3 bis 8 bar und durch eine zweite Zuleitung 33 Flüssigkeit zugeführt wird. Bei dieser Ausführung ist ein Kompressor 34 in der ersten Zuleitung 32 angeordnet, mit dessen Saugseite die zu der Unterdruckzone 20 führende Leitung 19 verbunden ist. Die Flüssigkeitszuleitung 33 gabelt sich, wobei durch eine Leitung 35 reine Flüssigkeit aus einem Vorrat und durch eine in üblicher Weise abdichtend durch eine Seitenwand des Flotationsbeckens hindurchgeführte Leitung 36 ein Teil der Reinflüssigkeit aus der Reinflüssigkeitszone 16 des Flotationsbeckens 1 entnommen und zugeführt wird. Durch eine Pumpe 37 wird dabei der notwendige Förderdruck gegen den Innendruck des Druckbehälters 31 aufgebracht. Vom Druckbehälter 31 führt eine Ableitung 38 zum Zulauf 5 an der Schmalseite 2 des Flotationsbeckens 1 ; diese Ableitung 38 ist unmittelbar vor ihrer Einmündung in den Zulauf 5, der aus einer Sammelzuleitung besteht, die in über die Breite der Schmalseite 2 verteilte einzelne Zuleitungen mündet, mit einem handelsüblichen Entspannungsventil 39 versehen. Eine in üblicher Weise abdichtend durch eine Seitenwand des Flotationsbeckens 1 hindurchgeführte Zweigleitung 40 zweigt stromauf von dem Entspannungsventil 39ab und führt zu einer Entspannungszone 41 innerhalb des Flotationsbeckens 1 ; unterhalb der vorlaufenden Bahn des Bandfilters 11 ist dazu ein über die Breite des Bandfilters 11 verlaufendes Düsenrohr 42 vorgesehen, das an die Zweigleitung 40 angeschlossen ist, die ein weiteres Entspannungsventil 39 trägt.

Die vorstehend beschriebene Anlage arbeitet wie folgt :

Die im Druckbehälter 31 erzeugte druckgasgesättigte Flüssigkeit wird über das Entspannungsventil 39 im Zulauf 5 mit der in das Flotationsbecken 1 eintretenden schwebstoffhaltigen Flüssigkeit vermischt ; gleichzeitig wird der Umlauf des Bandfilters 11 in Gang gesetzt. Durch die Entspannung wird das nur unter Druck in der Flüssigkeit gelöste Gas in Form feiner Bläschen frei, durch welche die Schwebstoffe in Form eines Flotationsschlamms 43 in der Flotationszone 15 an der Flüssigkeitsoberfläche 17 abgeschieden werden. Der Flotationsschlamm 43 wird in der in Figur 1 nach rechts gerichteten Strömung mitgenommen und wandert langsam in Richtung auf die Stelle, an der das umlaufende Bandfilter 11 aus der Flüssigkeitsoberfläche 17 austritt. In diesem Bereich befindet sich eine bekannte Schlammauflauf- und Drainageeinrichtung 44 (Fiedrich-Karl Schmidt, l. c.), durch die der Übergang des Flotationsschlamms 43 auf das umlaufende Bandfilter 11 erleichtert und gleichzeitig eine erste Vortrocknung bewirkt wird. Mit dem Flotationsschlamm 43 werden auch alle nicht flotierbaren Anteile der in der Flüssigkeit suspendierten Stoffe ausgetragen, da diese durch Sedimentation auf dem umlaufenden Bandfilter 11 zur Ablagerung kommen. Es kommt dadurch nicht zu einer Ablagerung solcher Stoffe am Boden 4 des Flotationsbeckens 1, und alle nicht flotierbaren Stoffe werden durch das Bandfilter 11 von der Reinflüssigkeitszone 16 ferngehalten. Am Ablauf 6 und der Reinflüssigkeitsleitung 7, die in Durchströmungsrichtung hinter dem Bandfilter 11 liegen, fällt daher stets die Reinflüssigkeit an.

Im weiteren Umlauf des Bandfilters 11 wird zunächst die Unterdruckzone 20 passiert, in der mittels des Kompressors 34 über die Leitung 19 Luft durch das Filter gesaugt und dadurch eine weitere Vortrocknung bewirkt wird. An der oberhalb des Sammelbehälters 22 befindlichen Antriebsrolle 13 wird das Bandfilter 11 um ca. 150° umgelenkt, so daß der vorgetrocknete Schlamm herunterfällt, in dem Sammelbehälter 22 gesammelt und durch den Abzug 23 abgesogen werden kann. Das zurücklaufende Bandfilter 11 tritt dann wieder durch die Flüssigkeitsoberfläche 17 hindurch und passiert die Waschzone 24, in der eventuell vorhandene restliche Schlammteilchen mittels der Waschvorrichtung 26, die druckseitig an die Flüssigkeitszufuhrleitung 33 der Druckgassättigungseinrichtung 30 angeschlossen ist, ausgewaschen werden. Das so gereinigte Bandfilter 11 gelangt über die Umlenkrollen 14, 12 wieder in die Flotationszone 15, in der eine weitere Reinigung in der Entspannungszone 41 erfolgt, bevor erneut die nicht flotierbaren Anteile auf dem Bandfilter 11 abgelagert werden.

Durch das Bandfilter 11 wird eine vor dem Zutritt von Verunreinigungen geschützte Reinflüssigkeitszone 16 geschaffen, in der auch der Ablauf 6 angeordnet ist. Störungen bei der Flotation, besonders bei stark schwankenden Schwebstoffgehalten, wirken sich daher selbst bei hohen Schwebstoffgehalten nicht aus, wenn nur noch die Hauptmenge der Schwebstoffe in der Flotationszone 15 zur Abscheidung kommt. Außerdem kann jederzeit über die Steuerung des Filterantriebs und/oder das Rückführverhältnis eine rasche Anpassung an wechselnde Schwebstoffgehalte erfolgen.

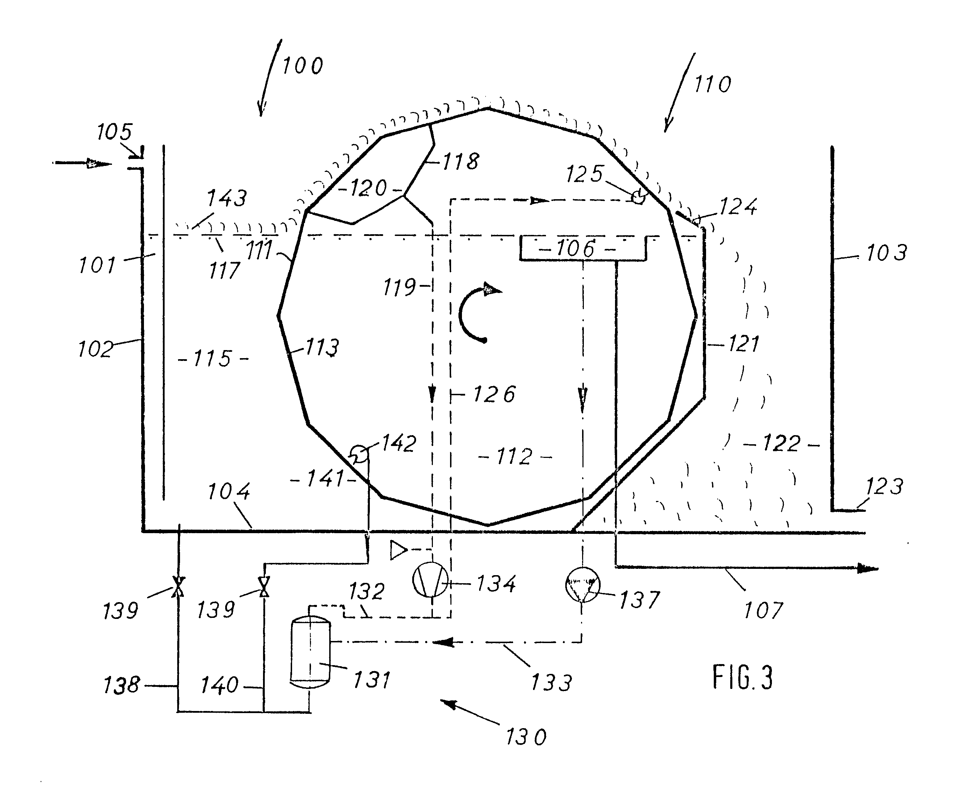

Es ist auch ohne weiteres möglich, den Sammelbehälter 22 an die Außenseite der Schmalseite 3 zu verlegen und die Antriebsrolle 13 jenseits davon anzuordnen. Der Ablauf 6 kann dann in Durchströmungsrichtung auch hinter der zurücklaufenden Bahn des Bandfilters 11 angeordnet werden. In dem Fall empfiehlt sich, zusätzlich zu der Unterdruckzone 20 im gleichen Bereich eine Überdruckzone (s. Figur 3) auszubilden und auch den vorerwähnten Abstreifer vorzusehen, sowie auf die Waschzone 24 zu verzichten.

Grundsätzlich kann das umlaufende Bandfilter 11, gegebenenfalls auch taschenförmige, Querstege tragen, die über die Breite des Bandfilters 11 verlaufen und sich günstig auf das Austragen des Schlamms auswirken. Die Querstege nehmen dann auch Ablagerungen vom Boden 4 des Flotationsbeckens 1 auf und fördern sie in die Flotationszone 15. Jedoch müssen die Schlammauflauf- und Drainageeinrichtung 44 und der Abstreifer entfallen oder daran angepaßt werden.

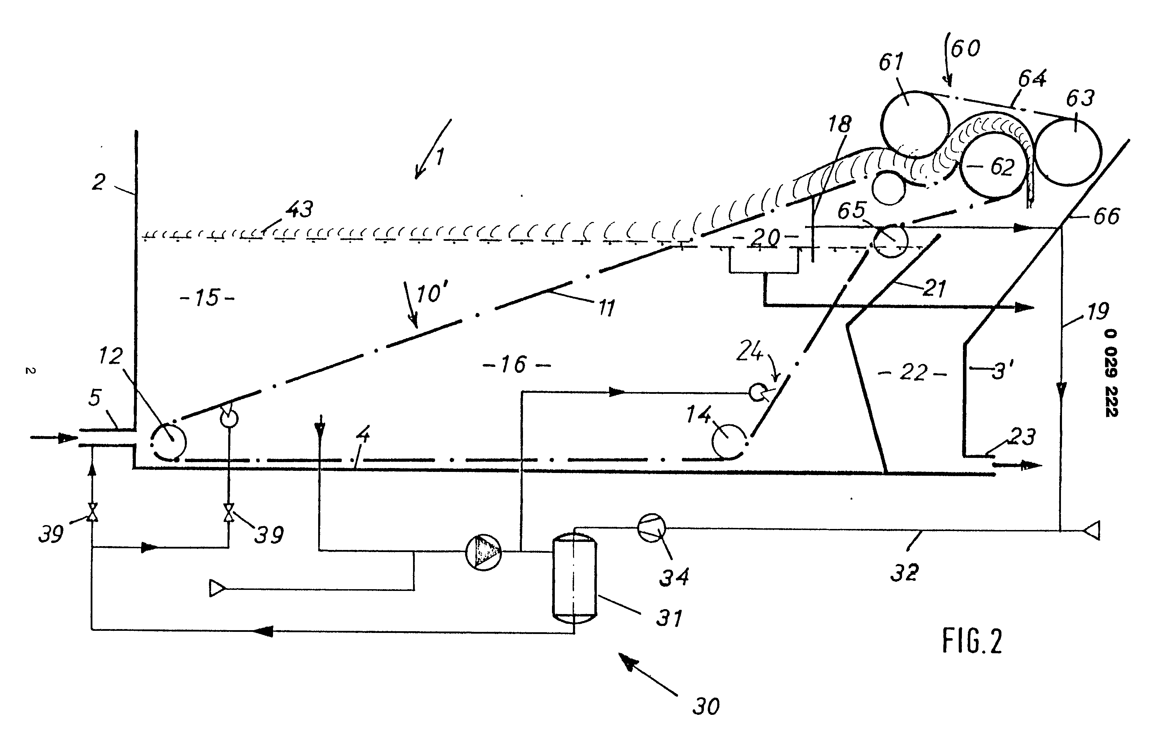

Die in Figur 2 dargestellte modifizierte Ausführung der integrierten Flotations-Filtrations-Anlage nach Figur 1 unterscheidet sich davon im wesentlichen durch eine zusätzliche Austragvorrichtung in Gestalt einer Walzenpresse, die allgemein mit 60 bezeichnet ist. Im übrigen ist die Anlage sehr ähnlich aufgebaut, jedoch ist die Antriebsrolle dabei so gewählt, daß das Bandfilter 11 unter Zug durch die Preßzone gefördert wird. Auch ist die Wirkungsweise der Anlage im wesentlichen die gleiche. Gleiche Teile sind daher mit gleichen Bezugszeichen versehen.

Wie bei der Ausführung nach Figur 1 ist das Flotationsbecken 1 mit den gegenüberliegenden Schmalseiten 2, 3' und dem Boden 4, mit dem Zulauf 5 und dem Ablauf 6, mit der kombinierten Filtrier- und Austragvorrichtung 10', mit der Trennwand 21 und dem Sammelbehälter 22 mit Abzug 23 und mit der Druckgassättigungseinrichtung 30 versehen. Das Bandfilter 11 teilt wie dort das Flotationsbecken 1 in die Flotationszone 15 und die Reinflüssigkeitszone 16, in der sich auch der Ablauf 6 zwischen der vorlaufenden und der zurücklaufenden Bahn des Bandfilters 11 befindet. Oberhalb der Flüssigkeitsoberfläche 17 ist in diesem Bereich wie dort eine durch die Trennwand 18 abgetrennte Unterdruckzone 20 ausgebildet, die über eine Leitung an die Saugseite des Kompressors 34 in der ersten Zuleitung 32 für den Druckbehälter 31 der Druckgassättigungseinrichtung 30 angeschlossen ist.

Das Bandfilter 11 läuft über die erste und zweite Umlenkrolle 12, 14 und eine der Antriebsrolle 13 in der Ausführung nach Figur 1 entsprechende, aber nicht angetriebene Rolle. Das Bandfilter 11 wird jedoch ausgehend von der Rolle nicht unmittelbar zurückgeführt, sondern passiert vorher eine im einfachsten Fall aus drei Walzen 61, 62, 63 bestehende Walzenpresse 60. Die Walzen 61, 62, 63 sind in einem nicht dargestellten Lagergerüst gelagert, das an den Seitenwänden des Flotationsbeckens 1 verankert ist. Die Walzen sind in verschiedenen Abständen zueinander angeordnet, so daß das Bandfilter 11 zwischen ihnen verschieden stark zusammengepreßt wird. Um die Walzen 61 und 63 ist ein Stützband 64 gelegt, das dem um die Walze 62 durch das Bandfilter 11 herumgeführten Schlamm entgegenwirkt. Dadurch erfolgt eine weitere Trocknung, und es ist eine übliche, nicht gezeigte Drainageeinrichtung zur Abführung der zwischen den Walzen 61, 62, 63 ausgedrückten Flüssigkeit vorgesehen. An der mittleren Walze 62 wird das Bandfilter 11 um ca.

90° aus der Vertikalen umgelenkt, und es läuft dann über eine weitere Umlenkrolle 65 zurück und an der Trennwand 21 vorbei zur zweiten Umlenkrolle 14. Die Schmalseite 3' des Flotationsbeckens 1 trägt unterhalb der Walzenpresse 60 eine Rutsche 66, die nach unten in Richtung auf den Sammelbehälter 22 geneigt ist. Beim Durchlauf des Bandfilters 11 durch die Walzenpresse 60 löst sich der stärker getrocknete Schlammkuchen bei der Umlenkung an der mittleren Walze 62 und fällt auf die Rutsche 66 und von dort in den Sammelbehälter 22.

Bei den in Figuren 1 und 2 dargestellten integrierten Flotations-Filtrations-Anlagen durchsetzt die Filtriervorrichtung das ganze Flotationsbecken 1. An deren Stelle kann auch eine Tauchfiltervorrichtung verwendet werden, die aus einem Rahmen besteht, an dem ein Bandfilter umläuft. Der Rahmen ist mit einem Ende an der Schmalseite 3 des Flotationsbeckens 1 befestigt und das andere Ende taucht, gegebenenfalls unter einem einstellbaren Winkel, in das Innere des Flotationsbeckens 1 ein. Die Reinflüssigkeitszone wird dann durch den Rahmen der Tauchfiltervorrichtung bestimmt, in dem zwischen den umlaufenden Bahnen des Bandfilters ein oder mehrere zur Innenseite der Bahnen offene Kammern ausgebildet sind. Die Kammern sind über eine Reinflüssigkeitsleitung an eine Pumpe angeschlossen. Tauchfiltervorrichtungen dieser Art sind bekannt (US-PS 3 347 378) und daher hier nicht im einzelnen beschrieben.

In Figur 3 ist eine zweite Ausführungsform einer integrierten Flotations-Filtrations-Anlage dargestellt. Das Flotationsbecken 100 hat eine erste Schmalseite 102, eine zweite Schmalseite 103 und einen Boden 104. Ein Zulauf 105 ist am oberen Rand der ersten Schmalseite 102 vorgesehen und mündet in einen Verteilerkanal 101, der sich über die Breite der Schmalseite 102 erstreckt und kurz oberhalb des Bodens 104 endet. Ein überlaufartig ausgebildeter Ablauf 106 ist mit einer Reinflüssigkeitsleitung 107 verbunden. Die Reinflüssigkeitsleitung 107 kann gegebenenfalls auch an die Saugseite einer zuflußabhängig gesteuerten Pumpe angeschlossen sein, wobei dann der Ablauf 106 entfällt.

Innerhalb des Flotationsbeckens 100 befindet sich eine kombinierte Filtrier- und Austragvorrichtung 110. Sie enthält ein Filter 111 am Umfang einer Filtertrommel 112, die bis nahe an den Boden 104 des Flotationsbeckens 100 reicht und deren Durchmesser größer als die Füllhöhe des Flotationsbeckens 100 ist. Die Filtertrommel 112 ist an den Stirnseiten auf einer stationären, nicht gezeigten Hohlwelle gelagert und wird über ein Kettenrad angetrieben, das wie vorher mit einem Elektromotor in Antriebsverbindung steht, der am oberen Rand des Flotationsbeckens 100 gehaltert ist. Durch die stationäre Hohlwelle verlaufen die in das Innere der Filtertrommel 112 führenden Leitungen. Stattdessen kann die Filtertrommel auch in einem abdichtend in das Flotationsbecken 100 eingesetzten Rahmen enthalten sein und eine offene Stirnseite aufweisen, durch die in üblicher Weise abdichtend durch die benachbarte Seitenwand des Flotationsbeckens 100 hindurchgeführte Leitungen in das Innere der Filtertrommel eingeführt sind. Die Antriebsvorrichtung greift dann am Umfang der Filtertrommel an. Aus Gründen der Übersichtlichkeit ist die Antriebsvorrichtung, die aus handelsüblichen Bauteilen besteht, nicht im einzelnen in Figur 3 dargestellt; die Filtertrommel 112 läuft aber in jedem Falle in Richtung der Durchströmung des Flotationsbeckens 100 um.

Das Filter 111 kann in unterschiedlichster Weise ausgestaltet sein; in Figur 3 bildet die Filtertrommel 112 im Schnit ein Vieleck, und das Filter 111 ist aus am Umfang der Filtertrommel 112 angeordneten Lochplatten 113 zusammengesetzt, die sich an einem (nicht gezeigten) Rahmen an der Hohlwelle der Filtertrommel 112 abstützen. Die Lochplatten 113 können auch mit einem Bandfilter bedeckt sein, das die Filtertrommel 112 umspannt. Die Filtertrommel 112 kann auch zylindrisch ausgebildet sein und einen Lochmantel tragen, der gegebenenfalls mit einem Bandfilter bespannt ist. Im einfachsten Fall und bei hinreichend kleinen Dimensionen, bei denen keine besondere Abstützung erforderlich ist, kann das Bandfilter auch unmittelbar den von der Hohlwelle getragenen Rahmen umspannen. Das Filter 111 wird dabei entsprechend den von dem jeweiligen Anwendungszweck bestimmten Anforderungen ausgewählt. Es trennt auch hier eine Flotationszone 115 von einer im Inneren der Filtertrommel 112 ausgebildeten Reinflüssigkeitszone, in der sich auch der Ablauf 106 befindet.

Durch das Innere der Filtertrommel 112 erstreckt sich oberhalb der Flüssigkeitsoberfläche 117 ein an den Seitenwänden des Flotationsbeckens 10 befestigter Kasten 118, der mit (nicht gezeigten) gummielastischen Lippen den Lochplatten 113 von unten her dichtend anliegt und über eine Leitung 119 an eine Unterdruckquelle angeschlossen ist. Dadurch wird im Bereich des Kastens 118 unterhalb des Filters 111 eine Unterdruckzone 120 ausgebildet. An der gegenüberliegenden Seite des Raumes im Inneren des Filtertrommel 112 ist oberhalb der Flüssigkeitsoberfläche 117 eine nicht näher bezeichnete Überdruckzone ausgebildet. In dieser Zone sind unterhalb des Filters 111 Fächerdüsen 125 angeordnet, die über eine Sammelleitung 126 mit einer Überdruckquelle verbunden sind.

Im Bereich der Schmalseite 103 erstreckt sich eine Trennwand 121 als Teil einer Schlammabzugsvorrichtung quer durch das Flotationsbecken 100 und bildet dadurch mit der Schmalseite 103 und den entsprechenden Teilen der Seitenwände des Flotationsbeckens 100 einen Sammelbehälter 122 mit einem Abzug 123 für den darin gesammelten Schlamm. An ihrem oberen Rand trägt die Trennwand 121 einen Abstreifer 124, der dem Filter 111 unter einem spitzen Winkel anliegt. Der Abstreifer 124 besteht im wesentlichen aus einer Schneide aus gummielastischem Material, die an der Oberfläche des Filters 111 angreift und dadurch die Ablösung des Schlamms von dem Filter 111 fördert. Der abgelöste Schlamm wird über die von dem Abstreifer 124 gebildete Schrägfläche in den Sammelbehälter 122 abgeleitet.

Bei Bedarf kann auch bei dieser Ausführung der integrierten Flotations-Filtrations-Anlage eine Flüssigkeitswaschzone vorgesehen werden.

Eine allgemein mit 130 bezeichnete Druckgassättigungseinrichtung besteht aus einem Druckbehälter 131, dem über eine erste Zuleitung 132 oder 119 Druckgas unter einem bestimmten Druck in der Größenordnung von 3 bis 8 bar und durch eine zweite Zuleitung 133 Flüssigkeit zugeführt wird. In der ersten Zuleitung 132 ist ein Kompressor 134 angeordnet, mit dessen Saugseite die zu der Unterdruckzone 120 führende Leitung 119 verbunden ist. An die Druckseite des Kompressors 134 ist die zu der Überdruckzone führende Leitung 126 angeschlossen. Die Flüssigkeitszuleitung 133 ist bei dieser Ausführung eine zu der Reinflüssigkeitsleitung 107 parallele Leitung, die mit dem Ablauf 106 verbunden ist und in der eine Pumpe 137 liegt, mittels derer die Reinflüssigkeit gegen dessen Innendruck in den Druckbehälter 131 gefördert wird. Vom Druckbehälter 131 führt eine Ableitung 138, durch die über ein oder mehrere Entspannungsventile 139 druckgasgesättigte Flüssigkeit im Bereich des Auslaufs des Verteilerkanals 101 nahe dem Boden 104 des Flotationsbeckens 100 in die Flotationszone 115 eingebracht wird. Eine Zweigleitung 140 zweigt stromauf von den Entspannungsventilen 139 ab und führt zu einer Entspannungszone 141. Dazu ist eine über die Breite des Filters 111 verlaufende Düse 142 vorgesehen, die an die Zweigleitung 140 über ein weiteres Entspannungsventil 139 angeschlossen ist.

Die vorstehend beschriebene Anlage arbeitet wie folgt :

Die im Druckbehälter 131 erzeugte druckgasgesättigte Flüssigkeit wird über die Entspannungsventile 139 in die Flotationszone 115 eingebracht, während die schwebstoffhaltige Flüssigkeit über den Zulauf 105 und den Verteilerkanal 101 zugeführt wird ; gleichzeitig wird die Filtertrommel 112 in Drehung versetzt. Durch die Entspannung wird das nur unter Druck in der Flüssigkeit gelöste Gas in Form feiner Bläschen frei, durch welche die Schwebstoffe in Form eines Flotationsschlamms 143 in der Flotationszone 115 an der Flüssigkeitsoberfläche 117 abgeschieden werden. Der Flotationsschlamm 143 wird in der in Fig. 3 nach rechts gerichteten Strömung mitgenommen und wandert langsam in Richtung auf die Stelle, an der das umlaufende Filter 111 aus der Flüssigkeitsoberfläche 117 austritt. Mit dem Flotationsschlamm 143 werden auch alle nicht flotierbaren Anteile der in der Flüssigkeit suspendierten Stoffe ausgetragen, da diese durch sedimentation auf dem umlaufenden Filter 111 zur Ablagerung kommen. Diese Stoffe werden dadurch von der Reinflüssigkeitszone im Inneren der Filtertrommel 112 ferngehalten. Am Ablauf 106 und in der Reinflüssigkeitsleitung 107, die in Durchströmungsrichtung hinter dem Filter 111 liegen, fällt daher stets die Reinflüssigkeit an.

Beim weiterem Umlauf des Filters 111 wird zunächst die Unterdruckzone 120 passiert, in der mittels des Kompressors 134 über die Leitung 119 Luft durch das Filter 111 gesaugt und dadurch eine Vortrocknung bewirkt wird. Eine die Ablösung des Schlamms von dem Filter 111 fördernde Überdruckzone wird durch einen auf das Filter 111 gerichteten Druckgasstrom erzeugt, der aus den Fächerdüsen 125 austritt. Mit dem oberhalb des Sammelbehälters 122 befindlichen Abstreifer 124 wird der vorgetrocknete Schlamm von dem Filter 111 in den Sammelbehälter 122 geleitet und kann durch den Abzug 123 abgezogen werden. Das Filter 111 tritt dann wieder durch die Flüssigkeitsoberfläche 117 hindurch und passiert bei dem erneuten Eintritt in die Flotationszone 115 eine Entspannungszone 141, die zusätzlich eine weitere Reinigung des Filters 111 bewirkt.

Auch bei dieser Ausführung wird durch das Filter 111 eine vor dem Zutritt von Verunreinigungen geschützte Reinflüssigkeitszone innerhalb der Filtertrommel 112 geschaffen, in der auch der Ablauf 106 angeordnet ist. Störungen bei der Flotation, besonders bei stark schwankenden Schwebstoffgehalten, wirken sich daher selbst bei hohen Schwebstoffgehalten nicht aus, wenn nur noch die Hauptmenge der Schwebstoffe in der Flotationszone 115 zur Abscheidung kommt. Außerdem kann jederzeit über die Steuerung des Antriebs für die Filtertrommel 112 und/oder das Zufuhrverhältnis von Zulauf 105 und Ableitung 138, 140 eine rasche Anpassung an wechselnde Schwebstoffgehalte erfolgen.

Es ist auch hier möglich, den Sammelbehälter 122 an die Außenseite der Schmalseite 103 zu verlegen und den Abstreifer 124 dorthin zu richten. Der Ablauf 106 kann dann in Durchströmungsrichtung auch hinter der zurücklaufenden Bahn des Filters 111 angeordnet werden.

Grundsätzlich kann das umlaufende Filter 111, gegebenenfalls auch taschenförmige, Querstege tragen, die über die Breite des Filters 111 verlaufen und sich günstig auf das Austragen des Schlamms auswirken. Die Querstege nehmen dann auch Ablagerungen vom Boden 104 des Flotationsbeckens 100 auf und fördern sie in die Flotationszone 115. Jedoch muß dann der Abstreifer 124 am oberen Rand der Trennwand 121 entfernt oder angepaßt werden.

Auch die Filtertrommel 112 kann wie bei der modifizierten Ausführung der integrierten Flotations-Filtrations-Anlage nach Figur 2 mit einer Walzenpresse kombiniert werden, wenn die Filtertrommel 112 mit einem geeigneten Bandfilter umspannt wird, das durch die Walzenpresse geführt ist.

Auch bei der in Figur 3 dargestellten Ausführung kann dem Filter 111 eine Schlammauflauf- und Drainageeinrichtung von der im Zusammenhang mit Figur 1 beschriebenen Art vorgeschaltet sein.

Die vorstehend beschriebenen integrierten Flotations-Filtrations-Anlagen haben ein umlau-

fendes Filter sowie eine außerhalb des Filters liegende Flotationszone und eine von dem Filter umschlossene Reinflüssigkeitszone. Nachfolgend werden Anlagen dieser Art mit vertauschter Zonenanordnung beschrieben.

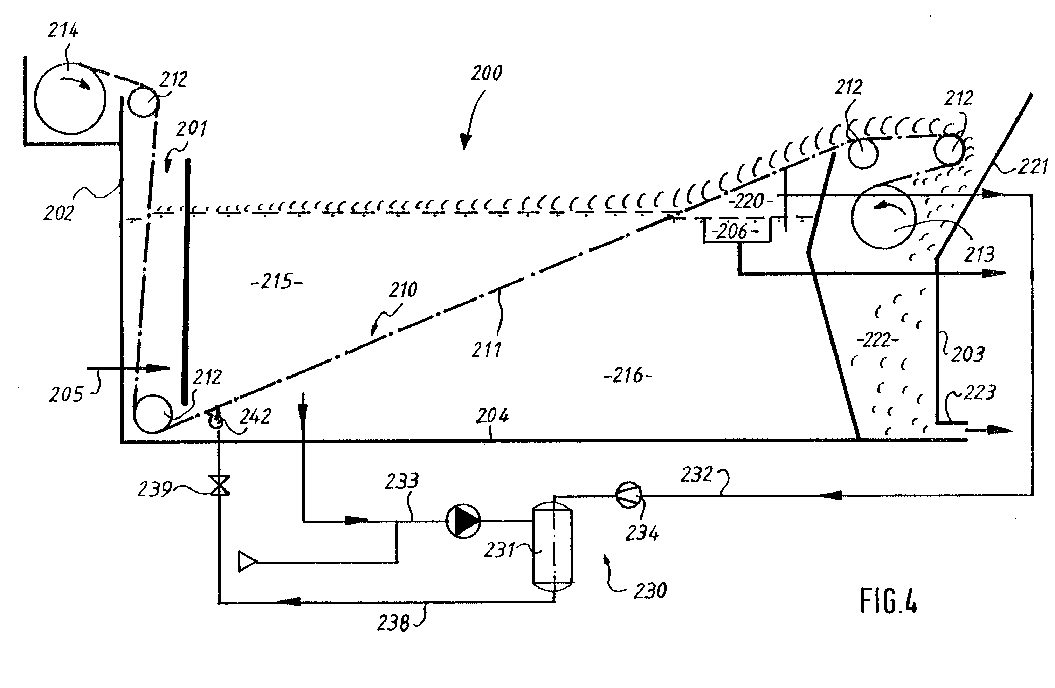

Die in Figur 4 dargestellte dritte Ausführung einer integrierten Flotations-Filtrations-Anlage zeigt ähnlich wie die Ausführung nach Figur 1 ein Flotationsbecken 200 mit gegenüberliegenden Schmalseiten 202, 203 und einem Boden 204, mit einem Zulauf 205 und einem Ablauf 206, mit einer kombinierten Filtrier- und Austragvorrichtung 210, mit einer Trennwand 221 und dem Sammelbehälter 222 mit Abzug 223 und mit einer Druckgassättigungseinrichtung 230. Das Flotationsbecken 200 weist zusätzlich an der Schmalseite 202 ein Wehr auf, das ähnlich der Ausführungsform nach Figur 3 einen Verteilerkanal 201 für die Zuführung der schwebstoffhaltigen Flüssigkeit von der Flotationszone 215 trennt. Der Zulauf 205 mündet bei dieser Ausführung von der Seite her in den Verteilerkanal 201.

Die in Figur 4 dargestellte kombinierte Filtrier- und Austragvorrichtung 210 enthält ein durchlaufendes Bandfilter 211, das über erste, zweite, dritte und vierte Umlenkrollen 212 auf eine Abnahmerolle 213 von einer Vorratsrolle 214 abgezogen wird. Die zweite Umlenkrolle 212 befindet sich nahe dem Boden 204 des Verteilerkanals 201 ; der Zulauf 205 mündet im Bereich des Verteilerkanals 201 zwischen dem Bandfilter 211 und dem Wehr. Das Bandfilter 211 verläuft diagonal durch das Flotationsbecken 200 zur anderen Schmalseite 203 und gelangt über die dritte und vierte Umlenkrolle 212 zu der angetriebenen Abnahmerolle 213. Die letzteren befinden sich oberhalb des Flüssigkeitsspiegels über dem Sammelbehälter 222, wobei die Abnahmerolle 213 gegen die vierte Umlenkrolle 212 zurückgesetzt ist, so daß sich der Flotationsschlamm bei der Umlenkung des Bandfilters 211 an dieser Umlenkrolle von dem Bandfilter 211 weitgehend löst und in den Sammelbehälter 222 fällt. Diese Ablösung wird, vgl. die Ausführung nach Figur 1, durch eine Unterdruckzone 220 gefördert. Die Rollen 212 bis 214 sind wie dort an den Seitenwänden des Flotationsbeckens 200 gelagert und das Bandfilter 211 ist wie das Bandfilter 11 an den Seitenkanten abdichtend geführt. Das Bandfilter 211 besteht aus einem, den Beanspruchungen genügenden, aber nur zu einmaliger Verwendung bestimmtem Material ; die Vorratsrolle 214 und die Abnahmerolle 213 werden nach Abwicklung des Bandfilters 211 von der Vorratsrolle 214 ersetzt.

Die Druckgassättigungseinrichtung 230 enthält einen Druckbehälter 231, eine über einen Kompressor 234 an die Unterdruckzone 220 angeschlossene erste Zuleitung 232 für Druckgas unter einem Druck von 3 bis 8 bar und eine zweite Zuleitung 233 für Flüssigkeit, die teils an einen Reinflüssigkeitsvorrat, teils an die Reinflüssigkeitszone 216 angeschlossen ist. Eine Ableitung 238 ist abdichtend durch eine Seitenwandung des Flotationsbeckens 200 hindurchgeführt und mit einem an dessen Seitenwänden befestigten Düsenrohr 242 verbunden, das dem Bandfilter 211 von unten her anliegt. In der Ableitung 238 ist ein Entspannungsventil 239 angeordnet. Bei dieser Ausführung wird daher das druckgasgesättigte Medium der schwebstoffbeladenen Flüssigkeit nicht im Zulauf 205, sondern unmittelbar stromab vom Ausgang des Verteilerkanals 201 an der Durchtrittsstelle am Wehr, also beim Eintritt in die Flotationszone 215 zugeführt.

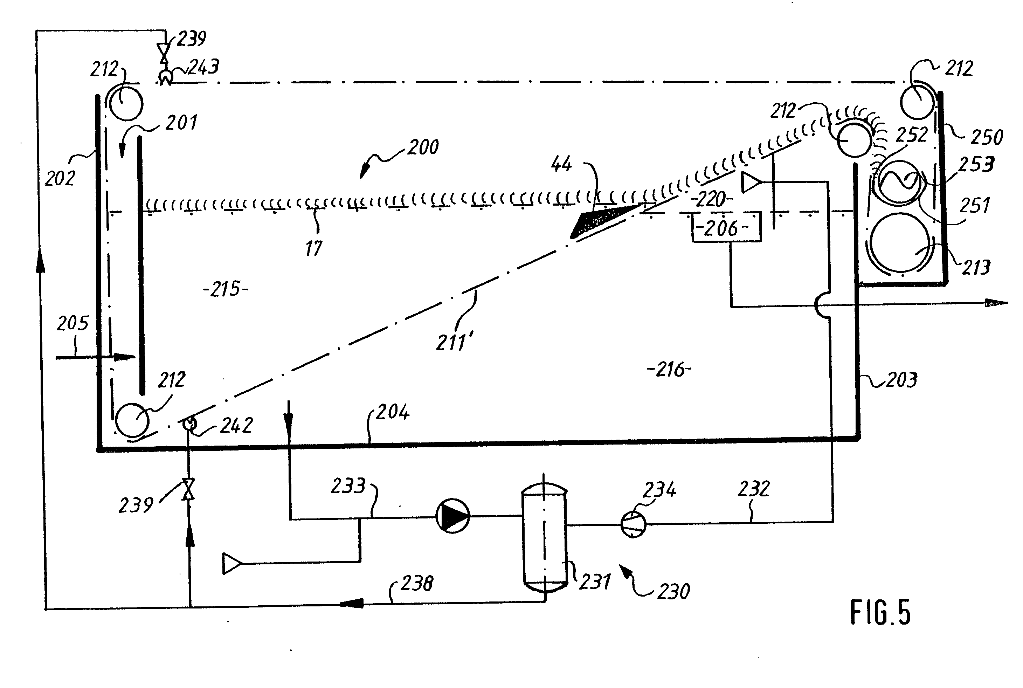

Eine Variante der Ausführung nach Figur 4 mit einem umlaufenden Bandfilter 211' zeigt Figur 5. Das Flotationsbecken 200 ist im wesentlichen wie in Figur 4 ausgebildet. Das umlaufende Bandfilter 211' wird von einer Antriebsrolle 213 angetrieben und läuft über vier Umlenkrollen 212. Zwei Umlenkrollen 212 leiten das Bandfilter 211' durch den mittels des Wehres von der Flotationszone 215 abgetrennten Verteilerkanal 201 ; über eine dritte Umlenkrolle 212 wird das diagonal durch das Flotationsbecken 200 laufende Bandfilter 211' der Antriebsrolle 213 zugeführt und schließlich über eine vierte Umlenkrolle 212 von der Antriebsrolle 213 her über das Flotationsbecken 200 hinweg zum Verteilerkanal 201 zurückgeführt. Eine Schlammauflauf- und Drainagevorrichtung 44 erleichtert den Übertritt des Flotationsschlamms auf das Bandfilter 211' an dessen Durchtrittsstelle durch die Flüssigkeitsoberfläche 17.

Die Antriebsrolle 213 und die ihr zugeordneten Umlenkrollen 212 sind in einem Gehäuse 250 an der Schmalseite 203 des Flotationsbeckens 200 angeordnet. In Umlaufrichtung vor der Antriebsrolle 213 befindet sich eine das Gehäuse 250 durchsetzende Rinne 251, die an der dem beladenen Bandfilter 211' zugekehrten Seite einen Abstreifer 252 nach Art des Abstreifers 124 bei der Ausführung nach Figur 3 trägt. Innerhalb der Rinne 251 läuft eine Schnecke 253, durch die der von dem umlaufenden Bandfilter 211' abgelöste Flotationsschlamm ausgetragen wird. Zur weiteren Reinigung des Bandfilters 211' ist in Umlaufrichtung vor der zum Verteilerkanal 201 führenden Umlenkrolle 212 ein diesem von außen anliegendes Düsenrohr 243 vorgesehen, das entsprechend dem Düsenrohr 242 ausgebildet und parallel zu diesem an die vom Druckbehälter 231 ausgehende Ableitung 238 ebenfalls über ein Entspannungsventil 239 angeschlossen ist.

Im übrigen sind die in Figuren 4 und 5 dargestellten integrierten Flotations-Filtrations-Anlagen analog zu der Ausführungsform nach Figur 1 aufgebaut und arbeiten entsprechend. Wie diese können sie gegebenenfalls auch mit einer Walzenpresse entsprechend Figur 2 kombiniert werden.

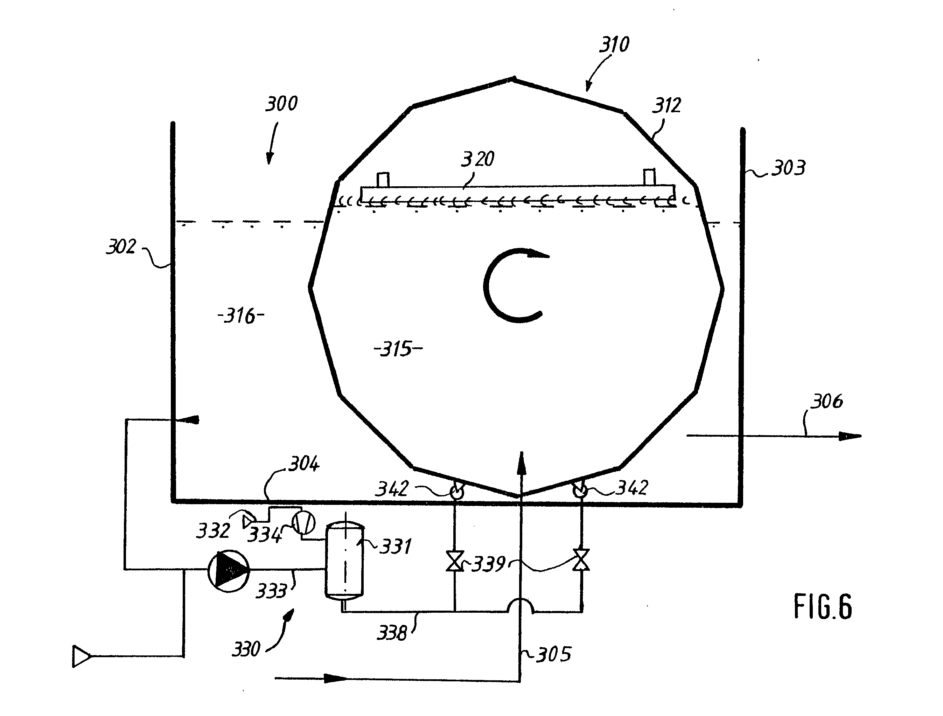

Figur 6 zeigt eine vierte Ausführung, die analog zur Ausführungsform nach Figur 3 aufgebaut ist. Ein Flotationsbecken 300 ist mit Schmalseiten 302, 303 und einem Boden 304, mit einem Zulauf 305 und einem Ablauf 306, mit einer Filtriervorrichtung 310 und einer damit zusammenwirkenden Austragvorrichtung 320 sowie mit einer Druckgassättigungseinrichtung 330 versehen. Die Filtriervorrichtung 310 besteht entsprechend der Filtriervorrichtung 110 aus einer in dem Flotationsbecken 300 umlaufenden Filtertrommel 312 mit einer offenen Stirnseite. Der Zulauf 305 mündet in das Innere der Filtertrommel 312. In der Filtertrommel 312 befindet sich eine Austragvorrichtung 320, die den auf der Flüssigkeit angesammelten Flotationsschlamm seitlich aus dem Flotationsbecken 300 austrägt. Austragvorrichtungen dieser Art sind bekannt (vgl. Friedrich-Karl Schmidt, l. c.) und werden daher hier nicht im einzelnen beschrieben.

Eine allgemein mit 330 bezeichnete Druckgassättigungseinrichtung enthält einen Druckbehälter 331, eine über einen Kompressor 334 führende erste Zuleitung 332 für Druckgas unter einem Druck von 3 bis 8 bar und eine zweite Zuleitung 333 für Flüssigkeit, die teils einem Reinflüssigkeitsvorrat, teils der außerhalb der Filtertrommel 312 befindlichen Reinflüssigkeitszone 316 entnommen wird. Eine Ableitung 338 ist abdichtend durch eine Seitenwand des Flotationsbeckens 300 hindurchgeführt und über Entspannungsventile 339 mit Düsenrohren 342 verbunden, die an der Seitenwand befestigt und zu beiden Seiten des Zulaufs 305 der Filtertrommel 312 von unten her anliegen.

Auch bei dieser Anordnung ist die Flotationszone 315 innerhalb der Filtertrommel 312 von der Reinflüssigkeitszone 316 außerhalb derselben durch die Filtriervorrichtung 310 getrennt. Gegebenenfalls können auch hier wie bei der Variante nach Figur 5 ein oder mehrere Düsenrohre vorgesehen werden, die nach Art des Düsenrohres 243 der Filtertrommel 312 oberhalb des Flüssigkeitsspiegels von außen anliegen und parallel zu den Düsenrohren 342 an die Ableitung 338 angeschlossen sind.

Es ist zweckmäßig, den Antriebsmotor bei den vorstehend beschriebenen integrierten Flotations- und Filtrationsanlagen nach den jeweiligen Anforderungen zu steuern. Dafür kann eine Zeitsteuerung vorgesehen werden, mittels derer die Antriebsrollen 13, 213 bzw. die Filtertrommeln 112, 312 nur in vorgegebenen Zeitabständen innerhalb wählbarer Intervalle angetrieben werden. Solche Zeitsteuerungen sind bekannt (Zeitrelais mit Synchronmotor, Typ AA 7610.21, AA 70011, Fa. Dold und Söhne KG, 7743 Furtwangen) und brauchen daher hier nicht im einzelnen beschrieben zu werden. Es kann dafür aber auch ein kontinuierlicher Umlauf mit einer Geschwindigkeitssteuerung über ein Schaltgetriebe oder über ein stufenlos einstellbares Getriebe wie ein PIV-Getriebe vorgesehen werden.

Der Umlauf der Antriebsrollen 13, 213 bzw. der Filtertrommeln 112, 312 kann auch über die Pegelstände zu beiden Seiten der jeweiligen Filtriervorrichtung geregelt werden. Die dafür notwendigen Einrichtungen (Berührungslose Pegelstandsmessungen mit Differenzspeicher und Kontaktgeber ; Sensor DU 210 mit Adapterrohr TSP 0845, Silometer FMU 2180, Kontaktgeber HTA 182 ; Endress und Hauser, 7867 Maulburg) sind bekannt und bedürfen keiner weiteren Beschreibung.

Die vorstehend beschriebenen Anlagen können auch mit mindestens einem Vibrator ausgerüstet werden, der zweckmäßigerweise jeweils an dem Bandfilter 11, 211, 211' bzw. dem Filter 111 angreift. Dadurch wird die Abtrennung der Flüssigkeit von dem auf dem Filter abgelagerten Schlamm unterstützt und gleichzeitig eine Verstopfung des Filters verhindert. Durch einen Vibrator kann auch die Säuberung des Filters unterstützt werden. Schließlich werden die in den Flotationszonen 15, 115, 215, 315 ablaufenden Absetzungsvorgänge durch die Übertragung der Schwingungen auf die Flüssigkeit gefördert.

Bei den vorstehend beschriebenen Anlagen wird auch die Weiterverarbeitung des Flotationsschlamms sehr erleichtert, weil dieser ohne zusätzlichen Aufwand bereits in vorgetrockneter Form und daher in wesentlich geringeren Volumina als bei den herkömmlichen Anlagen erhalten wird.

Die beschriebenen integrierten Flotations-Filtrations-Anlagen können zur Verarbeitung von Wasser oder Abwasser, zur Stoffrückgewinnung, aber auch zur Abscheidung von Öl oder Fett aus wässrigen Flüssigkeiten eingesetzt werden. Dabei wird das Material des Filters an den jeweiligen Verwendungszweck angepaßt und im einfachsten Fall mit Luft als Auftriebsgas gearbeitet.

**Patentansprüche**

1. Integrierte Flotations-Filtrations-Anlage, enthaltend :

ein Flotationsbecken (1, 100, 200, 300) mit einem Boden (4, 104, 204, 304) und mit einem Zulauf (5, 105, 205, 305) für schwebstoffhaltige Flüssigkeit ;

eine kombinierte Filtrier-Austragsvorrichtung (10, 10', 110, 210) bzw. Filtriervorrichtung (310) mit einer zusammenwirkenden Austragsvorrichtung (320), die sich über die Breite des Flotationsbeckens (1, 100, 200, 300) und nahe von dessen Boden (4, 104, 204, 304) bis über den Flüssigkeitsspiegel (17, 117) hinaus erstreckt und das Flotationsbecken in Durchströmungsrichtung der Flüssigkeit in eine Flotationszone (15, 115) und eine im Schwebstoffgehalt verminderte Reinflüssigkeitszone (16, 216, 316) unterteilt ;

eine im Bereich des Zulaufs (5, 105, 205, 305) nahe dem Boden (4, 104, 204, 304) des Flotationsbeckens (1, 100, 200, 300) und in der Durchströmungsrichtung der Flüssigkeit vor der kombinierten Filtrier-Austragsvorrichtung (10, 10', 110, 210) bzw. Filtriervorrichtung (310) mit der zusammenwirkenden Austragsvorrichtung (320) angeordnete Begasungseinrichtung ; und

einen Ablauf (6, 106, 206, 306) für im Schwebstoffgehalt verminderte Reinflüssigkeit in Durchströmungsrichtung hinter der Unterteilung des Flotationsbeckens (1, 100, 200, 300) durch die kombinierte Filtrier-Austragsvorrichtung (10, 10', 110, 210) bzw. Filtriervorrichtung (310) mit der zusammenwirkenden Austragsvorrichtung (320).

2. Integrierte Flotations-Filtrations-Anlage nach Anspruch 1, dadurch gekennzeichnet, daß die kombinierte Filtrier-Austragsvorrichtung (10, 10' 110, 210) durch die im Flotationsbecken (1, 100, 200) enthaltene Flüssigkeit zur Aufnahme und Austragung flotierter und nichtflotierter Schwebstoffanteile förderbar ist und daß eine steuerbare Antriebsvorrichtung für die kombinierte Filtrier-Austragsvorrichtung (10, 10', 110, 210) vorgesehen ist.

3. Integrierte Flotations-Filtrations-Anlage nach Anspruch 1 oder 2, dadurch gekennzeichnet, daß die kombinierte Filtrier-Austragsvorrichtung ein von einem Vorrat abgezogenes, durchlaufendes und über mindestens eine Umlenkeinrichtung geführtes Filter aufweist.

4. Integrierte Flotations-Filtrations-Anlage nach Anspruch 1 oder 2, dadurch gekennzeichnet, daß die kombinierte Filtrier-Austragsvorrichtung (10, 10', 110, 210) bzw. Filtriereinrichtung (310) mit zusammenwirkender Austragsvorrichtung (320) ein an mindestens einer Rolle umlaufendes Filter aufweist.

5. Integrierte Flotations-Filtrations-Anlage nach Anspruch 4, dadurch gekennzeichnet, daß das Filter (111) entlang der Umfangsfläche einer in dem Flotationsbecken (100, 300) umlaufenden, teilweise aus der Flüssigkeitsoberfläche (117) herausragenden Filtertrommel (112, 312) ausgebildet ist.

6. Integrierte Flotations-Filtrations-Anlage nach Anspruch 5, dadurch gekennzeichnet, daß die Flotationszone (315) im Inneren der Filtertrommel (312) ausgebildet und die mit der Filtriervorrichtung (310) zusammenwirkende Austragsvorrichtung (320) eine innerhalb der Filtertrommel (312) zu deren Achse parallel bewegliche Austragsvorrichtung ist.

7. Integrierte Flotations-Filtrations-Anlage nach einem der Ansprüche 3 bis 5, dadurch gekennzeichnet, daß das Filter über zwei oder mehr Rollen geführt ist, von denen mindestens eine dicht über dem Boden (4, 204) des Flotationsbeckens (1, 200) angeordnet ist.

8. Integrierte Flotations-Filtrations-Anlage nach Anspruch 7, dadurch gekennzeichnet, daß die kombinierte Filtrier-Austragsvorrichtung eine mit einem Ende an dem Flotationsbecken befestigte und in die darin enthaltene Flüssigkeit eintauchende Tauchfiltervorrichtung ist und daß zwischen den Bahnen des Filters der kombinierten Filtrier-Austragsvorrichtung mindestens eine die Reinflüssigkeitszone bestimmende und an eine Unterdruckquelle anschließbare Kammer ausgebildet ist.

9. Integrierte Flotations-Filtrations-Anlage nach Anspruch 7, dadurch gekennzeichnet, daß das Filter ein Bandfilter (11, 211, 211') ist, das diagonal durch das Flotationsbecken (1, 200) von einer ersten Umlenkrolle (12, 212), die dicht über dem Boden (4, 204) des Flotationsbeckens (1, 200) nahe der Eintrittsstelle der schwebstoffhaltigen Flüssigkeit angeordnet ist, zu einer oberhalb der Flüssigkeitsoberfläche (17) an der gegenüberliegenden Seite des Flotationsbeckens (1, 200) angeordneten Antriebsrolle (13, 213) und von dieser über eine zweite Umlenkrolle (14, 212) zurück zur ersten Umlenkrolle (12, 212) verläuft.

10. Integrierte Flotations-Filtrations-Anlage nach Anspruch 9, dadurch gekennzeichnet, daß das Bandfilter (11, 211, 211') beidseitig an Führungen an gegenüberliegenden Seiten des Flotationsbeckens (1, 200) abdichtend geführt ist.

11. Integrierte Flotations-Filtrations-Anlage nach einem der Ansprüche 7 bis 10, dadurch gekennzeichnet, daß der Ablauf (6, 106) innerhalb der kombinierten Filtrier-Austragsvorrichtung (10, 110, 210) angeordnet ist.

12. Integrierte Flotations-Filtrations-Anlage nach einem der Ansprüche 7 bis 10, dadurch gekennzeichnet, daß der Ablauf (206) in Durchströmungseinrichtung hinter der kombinierten Filtrier-Austragsvorrichtung (210) angeordnet ist.

13. Integrierte Flotations-Filtrations-Anlage nach Anspruch 11 oder 12, dadurch gekennzeichnet, daß die kombinierte Filtrier-Austragsvorrichtung (10, 110, 210) mit einer Schlammabzugsvorrichtung vorgesehen ist, die einen durch eine in Durchströmungsrichtung hinter dem Ablauf (6, 106, 206) angeordnete Trennwand (21, 121, 221) von der Reinflüssigkeitszone (16, 216) getrennten Sammelbehälter (22, 122, 222) aufweist.

14. Integrierte Flotations-Filtrations-Anlage nach Anspruch 13, dadurch gekennzeichnet, daß mindestens eine Rolle (13 ; 212, 213) jenseits der Trennwand (22, 122, 222) angeordnet und das Bandfilter (11, 211) an dieser Rolle (13, 212) um einen Winkel von mehr als 90° umlenkbar ist.

15. Integrierte Flotations-Filtrations-Anlage nach Anspruch 13 oder 14, dadurch gekennzeichnet, daß die Schlammabzugsvorrichtung einen an der kombinierten Filtrier-Austragsvorrichtung (10, 110, 210) angreifenden Abstreifer (124, 252) aufweist.

16. Integrierte Flotations-Filtrations-Anlage nach einem der Ansprüche 7 bis 15, dadurch gekennzeichnet, daß die kombinierte Filtrier-Austragsvorrichtung (10, 110) mit über ihre Breite verlaufenden und in Laufrichtung im Abstand voneinander angeordneten Querstegen versehen ist.

17. Integrierte Flotations-Filtrations-Anlage nach einem der Ansprüche 2 bis 16, dadurch gekennzeichnet, daß die kombinierte Filtrier-Austragsvorrichtung (10, 10', 110, 210) eine im Raum oberhalb der Flüssigkeitsoberfläche (17, 117) angeordnete Walzenpresse (60) aufweist.

18. Integrierte Flotations-Filtrations-Anlage nach einem der Ansprüche 2 bis 17, dadurch gekennzeichnet, daß oberhalb der Flüssigkeitsoberfläche (17, 117) und unterhalb des Filters eine sich über dessen Breite erstreckende Unterdruckzone (20, 120, 220) ausgebildet ist.

19. Integrierte Flotations-Filtrations-Anlage nach einem der Ansprüche 4 bis 18, dadurch gekennzeichnet, daß oberhalb der Flüssigkeitsoberfläche (17, 117) und unterhalb des Filters in dessen Laufrichtung vor der Wiedereintrittsstelle in die Flüssigkeit eine sich über die Breite des Filters erstreckende Überdruckzone ausgebildet
ist.

20. Integrierte Flotations-Filtrations-Anlage
nach einem der Ansprüche 4 bis 19, dadurch
gekennzeichnet, daß im Bereich des zurücklaufenden Filters eine Flüssigkeitswaschzone (24)
für das Filter ausgebildet ist.

21. Integrierte Flotations-Filtrations-Anlage
nach Anspruch 20, dadurch gekennzeichnet, daß
die Flüssigkeitswaschzone im Bereich der Flotationszone (15, 115) ausgebildet ist.

22. Integrierte Flotations-Filtrations-Anlage
nach einem der Ansprüche 1 bis 21, dadurch
gekennzeichnet, daß eine in Durchströmungsrichtung vor dem Filter angeordnete
Schlammauflauf- und Drainageeinrichtung (44)
vorgesehen sind.

23. Integrierte Flotations-Filtrations-Anlage
nach einem der Ansprüche 1 bis 22, dadurch
gekennzeichnet, daß mindestens ein auf das
Filter einwirkender Vibrator vorgesehen ist.

24. Integrierte Flotations-Filtrations-Anlage
nach einem der Ansprüche 1 bis 23, dadurch
gekennzeichnet, daß die Antriebsvorrichtung
eine Zeitsteuerung für den Vortrieb der kombinierten Filtrier- und Austragsvorrichtung (10, 10',
110, 210) bzw. der Filtiervorrichtung (310) mit der
zusammenwirkenden Austragsvorrichtung (320)
über vorbestimmte Zeitintervalle in vorgegebenen zeitlichen Abständen aufweist.

25. Integrierte Flotations-Filtrations-Anlage
nach Anspruch 24, dadurch gekennzeichnet, daß
die Antriebsvorrichtung einen mit steuerbarer
Geschwindigkeit arbeitenden Antrieb aufweist.

26. Integrierte Flotations-Filtrations-Anlage
nach Anspruch 24 oder 25, dadurch gekennzeichnet, daß die Antriebsvorrichtung über den Pegelstand an der kombinierten Filtrier-Austragsvorrichtung (10, 10', 110, 210) bzw. der Filtriervorrichtung (310) mit der zusammenwirkenden Austragsvorrichtung (320) steuerbar
ist.

27. Integrierte Flotations-Filtrations-Anlage
nach einem der vorstehenden Ansprüche, dadurch gekennzeichnet, daß die Begasungseinrichtung eine Druckentspannungsflotationseinrichtung mit einer Druckgassättigungseinrichtung
(30, 130, 230, 330) zur Sättigung einer Flüssigkeit
mit einem Gas unter Druck, mit einer Zuleitung
für die Flüssigkeit und mit einer unter Zwischenschaltung mindestens eines Entspannungsventils
(39, 139, 239, 339) im Bereich des Zulaufs (5, 105,
205, 305) in das Flotationsbecken (1, 100, 200,
300) einmündenden Ableitung (38, 138, 238, 338)
für die druckgasgesättigte Flüssigkeit aufweist
und daß die Zuleitung für die Flüssigkeit an die
Reinflüssigkeitszone (16, 216, 316) angeschlossen ist.

28. Integrierte Flotations-Filtrations-Anlage
nach Anspruch 27, dadurch gekennzeichnet, daß
ein an die Ableitung (38, 138, 238, 338) der
Druckgassättigungseinrichtung (30, 130, 230,
330) angeschlossenes Düsenrohr (42, 142, 242) in
Durchströmungsrichtung hinter der kombinierten
Filtrier-Austragsvorrichtung (10, 10', 110, 210) bzw. der Filtriervorrichtung (310) mit der zusammenwirkenden Austragsvorrichtung (320) angeordnet und auf diese gerichtet ist.

29. Integrierte Flotations-Filtrations-Anlage
nach Anspruch 28, dadurch gekennzeichnet, daß
im Bereich des Düsenrohres (42, 142, 242) eine
Entspannungszone (41, 141) in der Flotationszone (15, 115, 215, 315) ausgebildet ist.

30. Integriertes Flotations-Filtrations-Verfahren, bestehend aus den folgenden Verfahrensschritten :

Durchleiten einer schwebstoffartigen
Flüssigkeit durch ein Flotationsbecken ;

Begasen der schwebstoffhaltigen Flüssigkeit
beim Eintritt in das Flotationsbecken ;

Filtrieren der das Flotationsbecken durchsetzenden Flüssigkeit nach der Begasung und
gleichzeitiges Austragen flotierter und filtrierter
Schwebstoffanteile durch Fördern eines Filters
durch die das Flotationsbecken durchsetzende
Flüssigkeit unter einem Winkel zur Durchströmungsrichtung der Flüssigkeit ;

Entnehmen von im Schwebstoffgehalt verminderter Reinflüssigkeit im Anschluß an die
Filtration.

**Claims**

1. Integrated flotation-filtration plant, containing :

a flotation basin (1, 100, 200, 300) having a
bottom (4, 104, 204, 304) and an inlet (5, 105, 205,
305) for a liquid containing suspended matter ;

combined filtering-and-removing means (10,
10', 110, 210) or filtering means (310) with
cooperating removing means (320) which extend
across the width of the flotation basin (1, 100, 200,
300) and close from the bottom (4, 104, 204, 304)
thereof beyond the liquid level (17, 117) and
which subdivides the flotation basin in the
throughflow direction of the liquid into a flotation
zone (15, 115) and a pure-liquid zone (16, 216,
316) having a reduced content of the suspended
matter ;

gas introducing means arranged in the region
of the inlet (5, 105, 205, 305) close to the bottom
(4, 104, 204, 304) of the flotation basin (1, 100,
200, 300) and, in the throughflow direction of the
liquid, preceding the combined filtering-and-removing means (10, 10', 110, 210) or the filtering
means (310) with the cooperating removing
means (320) ; and

an outlet (6, 106, 206, 306) for the pure liquid
with the reduced content of the suspended matter
and, in the throughflow direction, following the
subdivision of the flotation basin (1, 100, 200, 300)
by the combined filtering-and-removing means
(10, 10', 110, 210) or the filtering means (310) with
the cooperating removing means (320).

2. Integrated flotation-filtration plant according to claim 1, characterised in that the combined
filtering-and-removing means (10, 10', 110, 210)
is conveyable through the liquid, which is contained in the flotation basin (1, 100, 200), for taking up and removing flotated and non-flotated portions of the suspended matter and that controllable drive means are provided for the combined filtering-and-removing means (10, 10', 110, 210).

3. Integrated flotation-filtration plant according to claim 1 or 2, characterised in that the combined filtering-and-removing means comprise a through-passing filter withdrawn from a supply and passed over at least one deflecting means.

4. Integrated flotation-filtration plant according to claim 1 or 2, characterised in that the combined filtering-and-removing means (10, 10', 110, 210) or the filtering means (310) with the cooperating removing means (320) comprise a circulating filter passed around at least one roller.

5. Integrated flotation-filtration plant according to claim 4, characterised in that the filter (111) is formed along the circumferential surface of a filter drum (112, 312) which revolves in the flotation basin (100, 300) and protrudes partially over the liquid level (117).

6. Integrated flotation-filtration plant according to claim 5, characterised in that the flotation zone (315) is formed within the interior of the filter drum (312) and that the removing means (320) cooperating with the filtering means (310) constitute removing means movable within the filter drum (312) parallel with respect to the axis of the filter drum.

7. Integrated flotation-filtration plant according to any one of claims 3 to 5, characterised in that the filter is guided over two or more rollers of which at least one is placed closely above the bottom (4, 204) of the flotation basin (1, 200).

8. Integrated flotation-filtration plant according to claim 7, characterised in that the combined filtering-and-removing means constitutes an immersion type filtering device secured to the flotation basin with one of its ends and immersed into the liquid contained therein and that at least one chamber formed between the runs of the filter of the combined filtering-and-removing means defines the pure-liquid zone and is connectable to a vacuum source.

9. Integrated flotation-filtration plant according to claim 7, characterised in that the filter constitutes a filter web (11, 211, 211') extending diagonally through the flottation basin (1, 200) from a first deflection roller (12, 212) placed closely above the bottom (4, 204) of the flotation basin (1, 200) near the infeed location of the liquid containing the suspended matter to a drive roller (13, 213) disposed above the liquid level (17) on the opposite side of the flotation basin (1, 200) and from the drive roller via a second deflection roller (14, 212) back to the first deflection roller (12, 212).

10. Integrated flotation-filtration plant according to claim 9, characterised in that the filter web (11, 211, 211') is sealingly guided on both sides at guide means provided on opposite side walls of the flotation basin (1, 200).

11. Integrated flotation-filtration plant according to any one of claims 7 to 10, characterised in that the outlet (6, 106) is arranged within the combined filtering-and-removing means (10, 110, 210).

12. Integrated flotation-filtration plant according to any one of claim 7 to 10, characterised in that the outlet (206) is arranged downstream from the combined filtering-and-removing means (210) in the throughflow direction.

13. Integrated flotation-filtration plant according to claim 11 or 12, characterised in that the combined filtering-and-removing means (10, 110, 210) includes mud discharge means comprising a collecting container (22, 122, 222) separated from the pure-liquid zone (16, 216) by a partition (21, 121, 221) disposed downstream from the outlet (16, 106, 206) in the throughflow direction.

14. Integrated flotation-filtration plant according to claim 13, characterised in that at least one roller (13 ; 212, 213) is arranged beyond of the partition (22, 122, 222) and the filter web (11, 211) is deflectable by an angle greater than 90 degrees at this roller (13, 212).

15. Integrated flotation-filtration plant according to claim 13 or 14, characterised in that the mud discharge means include a scraper (124, 252) acting upon the combined filtering-and-removing means (10, 110, 210).

16. Integrated flotation-filtration plant according to any one of claims 7 to 15, characterised in that the combined filtering-and-removing means (10, 110) comprise transverse bars extending across the width of the filtering-and-removing means and being arranged in a spaced relationship with respect to the running direction.

17. Integrated flotation-filtration plant according to any one of claims 2 to 26, characterised in that the combined filtering-and-removing means (10, 10', 110, 210) comprise a rolling press (60) disposed in the space above the liquid level (17, 117).

18. Integrated flotation-filtration plant according to any one of claims 2 to 17, characterised in that a subatmospheric pressure zone (20, 120, 220) extends above the liquid level (17, 117) and below the filter across the width of the filter.

19. Integrated flotation-filtration plant according to any one of claims 4 to 18, characterised in that an excess pressure zone extends above the liquid level (17, 117) and below the filter across the width of the filter and precedes the re-entry location of the filter into the liquid.

20. Integrated flotation-filtration plant according to any one of claims 4 to 19, characterised in that a liquid flush zone (24) for the filter is formed in the region of the return run of the filter.

21. Integrated flotation-filtration plant according to claim 20, characterised in that the liquid flush zone is formed within the region of the flotation zone (15, 115).

22. Integrated flotation-filtration plant according to any one of claims 1 to 21, characterised in that mud receiving and draining means (44) are provided upstream of the filter in the throughflow direction.

23. Integrated flotation-filtration plant according to any one of claims 1 to 22, characterised in that at least one vibrator acting upon the filter is provided.

24. Integrated flotation-filtration plant according to any one of claims 1 to 23, characterised in that the drive means comprise a time control for advancing the combined filtering-and-removing means (10, 10', 110, 210) or the filtering means (310) with the cooperating removing means (320) for predetermined periods of time at predetermined time intervals.

25. Integrated flotation-filtration plant according to claim 24, characterised in that the drive means comprise a drive operating at a controllable rate.

26. Integrated flotation-filtration plant according to claim 24 or 25, characterised in that the drive means are controllable by the liquid level at the combined filtering-and-removing means (10, 10', 110, 210) or the filtering means (310) with the cooperating removing ·means (320).

27. Integrated flotation-filtration plant according to any one of the preceding claims, characterised in that the gas introducing means comprise pressure release flotation means including pressurized gas saturation means (30, 130, 230, 330) for saturating a liquid with gas under pressure, a supply line for supplying the liquid, and a discharge line (38, 138, 238, 338) having at least one interconnected pressure relief valve (39, 139, 239, 339) for discharging pressurized gas saturated liquid and opening in the region of the inlet (5, 105, 205, 305) into the flotation basin (1, 100, 200, 300) and that the supply line for supplying the liquid is connected to the pure-liquid zone (16, 216, 316).

28. Integrated flotation-filtration plant according to claim 27, characterised in that a jet pipe (42, 142, 242) connected to the discharge line (38, 138, 238, 338) of the pressurized gas saturation means (30, 130, 230, 330) is disposed downstream from the combined filtering-and-removing means (10, 10', 110, 210) or the filtering means (310) with the cooperating removing means (320) in the throughflow direction and directed towards said filtering-and-removing means (10, 10', 110, 210) or the filtering means (310) with the cooperating removing means (320).

29. Integrated flotation-filtration plant according to claim 28, characterised in that in the region of the jet pipe (42, 142, 242) a pressure release zone (41, 141) is formed within the flotation zone (15, 115, 215, 315).

30. Integrated flotation-filtration method comprising the steps of :

passing a liquid containing suspended matter through a flotation basin ;

introducing gas into the liquid containing the suspended matter at the entry of such liquid into the flotation basin ;

filtering the liquid passing through the flotation basin and after the introduction of the gas and simultaneously removing flotated and filtered portions of the suspended matter by passing a filter through the liquid passing through the flotation basin and at an angle with respect to the throughflow direction of the liquid ;

withdrawing pure liquid of reduced content of the suspended matter after filtration.

## Revendications

1. Atelier intégré de flottage et de filtrage, comprenant :

un bassin de flottage (1, 100, 200, 300) ayant un fond (4, 104, 204, 304) et une conduite d'alimentation (105, 205, 305) pour un liquide contenant de matière en suspension ;

un dispositif combiné de filtrage et de décharge (10, 10', 110, 210) ou un dispositif de filtrage (310) ayant un dispositif de décharge (320) coopérant qui s'étend sur la largeur du bassin de flottage (1, 100, 200, 300) et depuis près de son fond (4, 104, 204, 304) jusqu'au-delà de la hauteur du liquide (17, 117), et qui divise le bassin de flottage dans la direction d'écoulement du liquide en une zone de flottage (15, 115) et une zone à liquide purifié (16, 216, 316) dont la teneur de matière en suspension est réduite ;

un dispositif de gazage disposé dans le domaine de la conduite d'alimentation (5, 105, 205, 305) près du fond (4, 104, 204, 304) du bassin de flottage (1, 100, 200, 300) et dans la direction d'écoulement du liquide devant le dispositif combiné de filtrage et de décharge (10, 10', 110, 210) ou le dispositif de filtrage (310) avec le dispositif de décharge (320) coopérant ; et

une sortie (6, 106, 206, 306) pour un liquide dont la teneur de matière en ·suspension est réduite, dans la direction d'écoulement derrière la subdivision du bassin de flottage (1, 100, 200, 300) par le dispositif combiné de filtrage et de décharge (10, 10', 110, 210) ou le dispositif de filtrage (310) avec le dispositif de décharge (320) coopérant (320).

2. Atelier intégré de flottage et de filtrage selon la revendication 1, caractérisé par le fait que le dispositif combiné de filtrage et de décharge (10, 10', 110, 210) peut être transporté à travers le liquide contenu dans le bassin de flottage (1, 100, 200) afin d'absorber et de décharger des parts de matière en suspension flottées et non flottées, et qu'un dispositif d'entraînement commandable est prévu pour le dispositif combiné de filtrage et de décharge (10, 10', 110, 210).

3. Atelier intégré de flottage et de filtrage selon la revendication 1 ou 2, caractérisé par le fait que le dispositif combiné de filtrage et de décharge présente un filtre parcourant tiré des réserves et guidé par au moins un dispositif de renvoi.

4. Atelier intégré de flottage et de filtrage selon la revendication 1 ou 2, caractérisé par le fait que le dispositif combiné de filtrage et de décharge (10, 10', 110, 210) ou le dispositif de filtrage (310) avec le dispositif de décharge coopérant (320) présente un filtre circulant sur au moins une poulie.

5. Atelier intégré de flottage et de filtrage selon la revendication 4, caractérisé par le fait que le filtre (111) est formé le long de la surface circonférentielle d'un tambour de filtre (112, 312) circulant dans le bassin de flottage (100, 300) et s'élevant partiellement au-dessus de la surface du liquide (117).

6. Atelier intégré de flottage et de filtrage selon la revendication 5, caractérisé par le fait que la zone de flottage (315) est formée à l'intérieur du tambour de filtre (312), et que le dispositif de décharge (320) coopérant avec le dispositif de filtrage (310) est mobile à l'intérieur du tambour de filtre (312) parallèlement à son axe.

7. Atelier intégré de flottage et de filtrage selon l'une des revendications 3 à 5, caractérisé par le fait que le filtre est guidé par deux ou plusieurs poulies dont l'une au moins est disposée étroitement au-dessus du fond (4, 204) du bassin de flottage (1, 200).

8. Atelier intégré de flottage et de filtrage selon la revendication 7, caractérisé par le fait que le dispositif combiné de filtrage et de décharge est un dispositif de filtre à immersion fixé avec une extrémité au bassin de flottage et immergeant dans le liquide y contenu, et qu'entre les lés du filtre du dispositif combiné de filtrage et de décharge est formée au moins une chambre définissant la zone de liquide purifié et raccordable à une source de dépression.

9. Atelier intégré de flottage et de filtrage selon la revendication 7, caractérisé par le fait que le filtre est une passe-bande (11, 211, 211') qui s'étend diagonalement à travers le bassin de flottage (1, 200) depuis une première poulie de renvoi (12, 212) disposée étroitement au-dessus du fond (4, 204) du bassin de flottage (1, 200) près de l'endroit d'entrée du liquide contenant de matière en suspension, jusqu'à une poulie de commande (3, 213) disposée au-dessus de la surface du liquide (17) sur le côté opposé du bassin de flottage (1, 200), et depuis celui-ci elle retourne par une deuxième poulie de renvoi (4, 212) vers la première poulie de renvoi (2, 212).

10. Atelier intégré de flottage et de filtrage selon la revendication 9, caractérisé par le fait que la passe-bande (11, 211, 211') est guidée des deux côtés de manière étanchante sur des guides sur des côtés opposés du bassin de flottage (1, 200).

11. Atelier intégré de flottage et de filtrage selon l'une des revendications 7 à 10, caractérisé par le fait que la sortie (6, 106) est disposée à l'intérieur du dispositif combiné de filtrage et de décharge (10, 110, 210).

12. Atelier intégré de flottage et de filtrage selon l'une des revendications 7 à 10, caractérisé par le fait que la sortie (206) est disposée dans la direction d'écoulement derrière le dispositif combiné de filtrage et de décharge (210).

13. Atelier intégré de flottage et de filtrage selon la revendication 11 ou 12, caractérisé par le fait que le dispositif combiné de filtrage et de décharge (10, 110, 210) est pourvu d'un dispositif d'extraction de boue qui présente un récipient collecteur (22, 122, 222) séparé de la zone de liquide purifié (16, 216) par une cloison (21, 121, 221) disposée dans la direction d'écoulement derrière la sortie (6, 106, 206).

14. Atelier intégré de flottage et de filtrage selon la revendication 13, caractérisé par le fait qu'au moins une poulie (13, 212, 213) est disposée·de l'autre côté de la cloison (22, 122, 222) et que la passe-bande (11, 211) peut être renvoyée à cette poulie (13, 212) d'un angle de plus de 90°.

15. Atelier intégré de flottage et de filtrage selon la revendication 13 ou 14, caractérisé par le fait que le dispositif d'extraction de boue présente un racleur (124, 252) en contact avec le dispositif combiné de filtrage et de décharge (10, 110, 210).

16. Atelier intégré de flottage et de filtrage selon l'une des revendications 7 à 15, caractérisé par le fait que le dispositif combiné de filtrage et de décharge (10, 110) est pourvu de traverses s'étendant sur sa largeur et disposées en sens de marche espacées l'une de l'autre.

17. Atelier intégré de flottage et de filtration selon l'une des revendications 2 à 16, caractérisé par le fait que le dispositif combiné de filtrage et de décharge (10, 10', 110, 210) présente une presse à rouleau (60) disposés dans l'espace au-dessus de la surface du liquide (17, 117).

18. Atelier intégré de flottage et de filtrage selon l'une des revendications 2 à 17, caractérisé par le fait qu'une zone de dépression (20, 120, 220) s'étendant sur la largeur du filtre est formée au-dessus de la surface du liquide (17, 117) et en dessous du filtre.

19. Atelier intégré de flottage et de filtrage selon l'une des revendications 4 à 18, caractérisé par le fait qu'une zone de suppression s'étendant sur la largeur du filtre est formée au-dessus de la surface du liquide (17, 117) et en dessous du filtre dans sa direction de marche devant l'endroit de rentrée dans le liquide.

20. Atelier intégré de flottage et de filtrage selon l'une des revendications 4 à 19, caractérisé par le fait qu'une zone de purification du liquide (24) pour le filtre est formée dans le domaine du filtre marchant en arrière.

21. Atelier intégré de flottage et de filtration selon la revendication 20, caractérisé par le fait que la zone de purification du liquide est formée dans le domaine de la zone de flottage (15, 115).

22. Atelier intégré de flottage et de filtrage selon l'une des revendications 1 à 21, caractérisé par le fait qu'un dispositif de sortie de boue et de drainage (44) est prévu qui est disposé dans la direction d'écoulement devant le filtre.

23. Atelier intégré de flottage et de filtrage selon l'une des revendications 1 à 22, caractérisé par le fait qu'au moins un vibrateur est prévu qui agit sur le filtre.

24. Atelier intégré de flottage et de filtrage selon l'une des revendications 1 à 23, caractérisé par le fait que le dispositif d'entraînement présente une commande de temps pour l'avancement du dispositif combiné de filtrage et de décharge (10, 10', 110, 210) ou le dispositif de filtrage (310) avec le dispositif de décharge coopérant (320) sur des intervalles de temps prédéterminés revenant à un rythme prédéterminé.

25. Atelier intégré de flottage et de filtrage selon la revendication 24, caractérisé par le fait que le dispositif d'entraînement présente une commande opérant à vitesse réglable.

26. Atelier intégré de flottage et de filtrage selon la revendication 24 ou 25, caractérisé par le fait que le dispositif d'entraînement est réglable au moyen du niveau du liquide au dispositif combiné de filtrage et de décharge (10, 10', 110, 210) ou au dispositif de filtrage (310) avec le dispositif de décharge coopérant (320).

27. Atelier intégré de flottage et de filtrage selon l'une des revendications ci-dessus, caractérisé par le fait que le dispositif de gazage présente un dispositif de flottage à détente de pression avec un dispositif de saturation à gaz comprimé (30, 130, 230, 330) destiné à saturer un liquide avec un gaz sous pression et ayant une conduite d'alimentation pour le liquide et une sortie (38, 138, 238, 338) pour le liquide saturé de gaz comprimé qui débouche dans le bassin de flottage (1, 100, 200, 300) en interconnectant au moins une soupape de détente (39, 139, 239, 339) dans le domaine de la conduite d'alimentation (5, 105, 205, 305), et que la conduite d'alimentation pour le liquide est raccordée à la zone de liquide purifié (16, 216, 316).

28. Atelier intégré de flottage et de filtrage selon la revendication 27, caractérisé par le fait qu'un tuyère (42, 142, 242) raccordé à la sortie (38, 138, 238, 338) du dispositif de saturation à gaz comprimé (30, 130, 230, 330) est disposé dans la direction d'écoulement derrière le dispositif combiné de filtrage et de décharge (10, 10', 110, 210) ou du dispositif de filtrage (310) avec le dispositif de décharge coopérant (320) et vise vers celui-ci.

29. Atelier intégré de flottage et de filtrage selon la revendication 28, caractérisé par le fait qu'une zone de détente (41, 141) est formée dans la zone de flottage (15, 115, 215, 315) dans le domaine du tuyère (41, 141).

30. Procédé intégré de flottage et de filtrage constitué des pas de procédé suivants :

Passer un liquide contenant de matière en suspension par un bassin de flottage ;

Gazer un liquide contenant de matière en suspension lors de son entrée dans le bassin de flottage ;

Filtrer le liquide contenu dans le bassin de flottage après le gazage et sortir simultanément des parts de matière en suspension flottées et filtrées en transportant un filtre à travers le liquide contenu dans le bassin de flottage sous un angle relatif à la direction d'écoulement du liquide ;

Prélever du liquide purifié dont la teneur en matière en suspension est réduite après le filtrage.

FIG.1

FIG.2

0 029 222

FIG.3

FIG.4

FIG.5

0 029 222

FIG.6

FIG.7